# EUROPEAN PATENT APPLICATION

(11) **EP 4 366 333 A1**
(43) Date of publication of application: **08.05.2024**
(21) Application number: 22869076.4
(22) Date of filing: 06.09.2022
(51) Int. Cl.: H04W 4/06

(54) **DEVICE DISCOVERY METHOD, DEVICE AND SYSTEM**

(30) Priority: 16.09.2021 CN 202111089471
(71) Applicant: Huawei Technologies Co., Ltd., Longgang Shenzhen, Guangdong 518129 (CN)
(72) Inventor: WANG, Xianfeng, Shenzhen, Guangdong 518129 (CN); HU, Shiyao, Shenzhen, Guangdong 518129 (CN); ZHANG, Yingying, Shenzhen, Guangdong 518129 (CN); DONG, Xing, Shenzhen, Guangdong 518129 (CN); LIANG, Zhitao, Shenzhen, Guangdong 518129 (CN)
(74) Representative: Epping - Hermann - Fischer
(86) International application number: PCT/CN2022/117263
(87) International publication number: WO 2023/040705

(57) **Abstract**

This application discloses a device discovery method, a device, and a system, and relates to the field of communication technologies, to guarantee reliability of device discovery, reduce network overheads, and reduce network load. In this application, a discovery device (for example, a first device) discovers a device by multicasting/broadcasting a discovery request message. When receiving the discovery request message and determining that there is another device (for example, a third device) that meets a condition specified by the first device, a device (for example, a second device) may notify the first device. In this way, the first device discovers the device (that is, the third device) when determining, by using a keepalive probe or the like, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

## Description

This application claims priority to Chinese Patent Application No. 202111089471.0, filed with the China National Intellectual Property Administration on September 16, 2021 and entitled "DEVICE DISCOVERY METHOD, DEVICE, AND SYSTEM", which is incorporated herein by reference in its entirety.

### TECHNICAL FIELD

Embodiments of this application relate to the field of communication technologies, and in particular, to a device discovery method, a device, and a system.

### BACKGROUND

With diversified development of terminal technologies, a range of terminal devices used by a user is expanded from one terminal device to a plurality of terminal devices. For example, in daily life, the user may use a plurality of terminal devices (for example, a television, a speaker, a smartphone, and a tablet computer) to implement different services based on a multi-device collaboration technology. The multi-device collaboration technology can break barriers between devices and between applications, to provide cross-platform and cross-system services, for example, to implement services such as projection (for example, video projection and image projection), audio projection, remote screen control, and file sharing.

Device discovery is an important part of the multi-device collaboration technology. Generally, device discovery may be implemented based on a unicast (unicast) technology, a multicast (also referred to as "multicast (multicast)") technology, a broadcast (broadcast) technology, or the like. A communication mode of the unicast technology is one-to-one, to be specific, information is sent and received between only two devices (nodes). A communication mode of the multicast/broadcast technology is one-to-many, to be specific, one device (node) sends information to a plurality of devices (nodes).

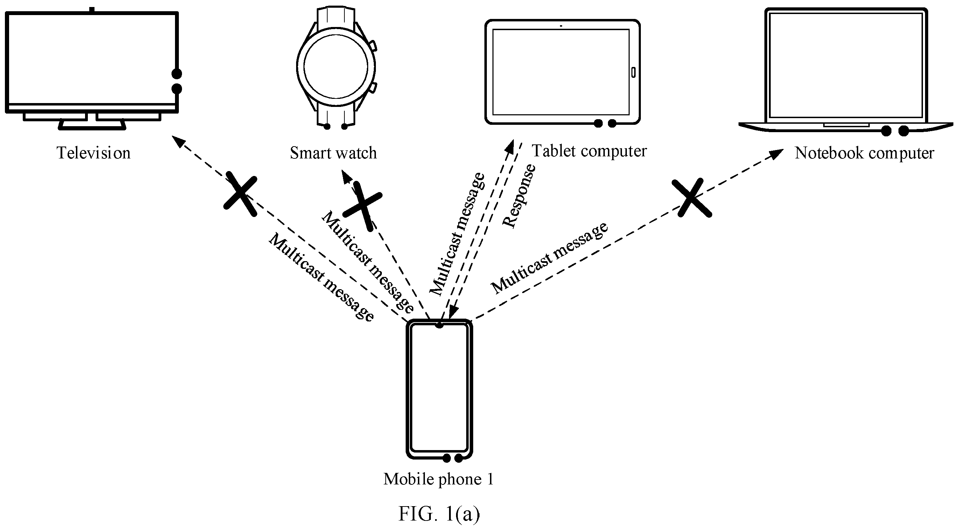

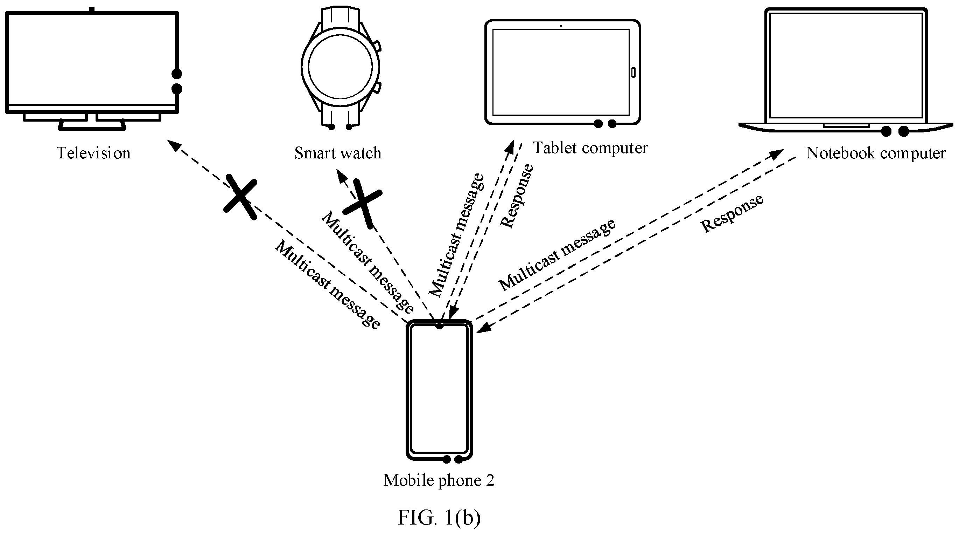

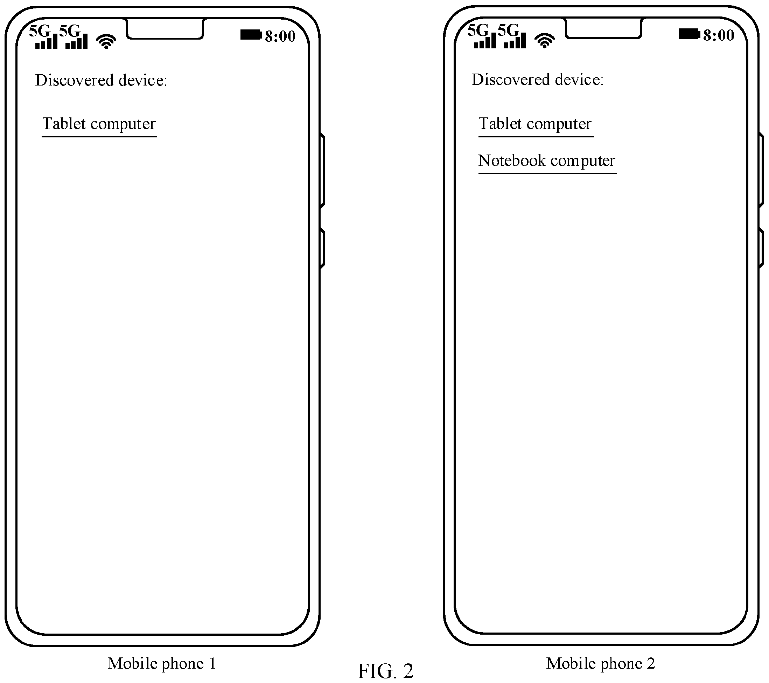

However, as the network environment becomes increasingly complex, an increasing quantity of terminal devices are involved in device discovery. In device discovery based on the unicast technology, data traffic is usually large, and network load is heavy. Therefore, device discovery based on the unicast technology is seldom used. In device discovery based on the multicast/broadcast technology, an anti-interference capability is poor, and a packet loss event occurs easily. Consequently, reliability is low. As shown in FIG. 1(a), it is assumed that a mobile phone 1 discovers devices through multicast/broadcast. However, a multicast/broadcast message is lost due to external influence such as poor network coverage or strong interference. As a result, the mobile phone 1 fails to discover a notebook computer, a television, and a smart watch. In addition, different devices have different anti-interference capabilities. Therefore, devices discovered by different devices based on the multicast/broadcast technology may be different. For example, it is assumed that the mobile phone 1 shown in FIG. 1(a) and a mobile phone 2 shown in FIG. 1(b) are in a same network environment and perform device discovery at a same location. Discovery results may still be different. For example, as shown in FIG. 2, the mobile phone 1 discovers only the tablet computer, and the mobile phone 2 discovers both the tablet computer and the notebook computer.

### SUMMARY

To resolve the foregoing technical problem, this application provides a device discovery method, a device, and a system. The technical solution provided in this application can guarantee reliability of device discovery, reduce network overheads, and reduce network load.

According to a first aspect, a device discovery method is provided. The method is applied to a first device, and the method includes: A first device sends, to N (N is a positive integer greater than or equal to 1) devices including a second device, a discovery request message that is used to discover a device that meets a specified condition. The discovery request message includes information indicating the specified condition. The first device receives, from a second device, a first response message that includes an identifier of a third device that meets the specified condition. The first response message indicates that the third device meets the specified condition. The first device sends, to the third device, a first status obtaining message that is used to obtain a status of the third device. The status of the third device indicates whether the third device is in a working state. The first device discovers the third device when the working state of the third device is obtained.

In an implementation, most modules of the third device are in a sleep state (for example, a processor is in a sleep state, and a display screen is off), but if a module (for example, a Bluetooth module) or some modules of the third device are working, the third device is still in the working state. In another implementation, when most or all modules of the third device are working, the third device is in the working state. The working state is not limited to the foregoing two manners. This is not limited in this application. The same applies to the working state in other solutions. Details are not described in the following.

In the solution provided in the first aspect, the first device (that is, a discovery device) attempts to discover a device by multicasting/broadcasting the discovery request message. When receiving the discovery request message from the first device and determining that there is another device (for example, the third device) that meets the condition specified by the first device, a device (for example, the second device) may notify the first device. In this way, the first device discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the first response message further carries an identifier of a fourth device that meets the specified condition. The method further includes: The first device sends, to the fourth device, a second status obtaining message that is used to obtain a status of the fourth device. The status of the fourth device indicates whether the fourth device is in a working state. The first device discovers the fourth device when the working state of the fourth device is obtained. In this application, the second device that receives the discovery request message from the first device may send, to the first device by using the first response message, identifiers of a plurality of devices (for example, including the third device and the fourth device) that meet the condition specified by the first device and that are determined by the second device. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the method further includes: The first device receives a second response message from the third device. The second response message includes an identifier of a fifth device that meets the specified condition. The first device sends, to the fifth device, a third status obtaining message that is used to obtain a status of the fifth device. The status of the fifth device indicates whether the fifth device is in a working state. The first device discovers the fifth device when the working state of the fifth device is obtained. In this application, when determining that there is another device (for example, the fifth device) that meets the specified condition, the third device that is indirectly discovered by the first device by using the second device and that meets the specified condition may notify the first device. In this way, the first device discovers the fifth device when determining, by using a keepalive probe, that the fifth device is in the working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, in this application, the first device may send, in a multicast or broadcast manner, the discovery request message to the N devices including the second device, and send the status obtaining message to a device (for example, the third device, the third device, or the fifth device) that meets the specified condition. For example, the first status obtaining message is sent to the third device in a unicast manner. For another example, the second status obtaining message is sent to the fourth device in the unicast manner. For still another example, the third status obtaining message is sent to the fifth device in the unicast manner. Further, the device (for example, the third device, the third device, or the fifth device) that meets the specified condition may send a response message to the first device in the unicast manner. For example, the second device sends the first response message to the first device in the unicast manner. The third device sends the second response message to the first device in the unicast manner. The fourth device sends a third response message to the first device in the unicast manner. The fifth device sends a fourth response message to the first device in the unicast manner. This can reduce the network overheads and reduce the network load.

In a possible implementation, the first device prestores service information of M devices, and before that a first device sends a discovery request message to N devices including a second device, the method further includes: The first device determines, based on the service information of the M devices, the N devices that meet the specified condition. M is a positive integer greater than or equal to N. According to the approach of discovering a device based on service information provided in this application, the first device may also determine, based on service information that is of a plurality of devices and that is prestored in the first device, devices to which the discovery request message is to be sent. According to this method, a success rate and reliability of device discovery can be improved, and a discovery procedure can be optimized.

In a possible implementation, the first response message further includes response information indicating that the second device is in the working state. The method further includes: The first device discovers the second device in response to the first response message. This application may also be compatible with a conventional device discovery mechanism. For example, a device (for example, the second device) that receives the discovery request message may also notify the first device when the device meets the specified condition. According to this method, a success rate and reliability of device discovery can be improved, and a discovery procedure can be optimized.

In a possible implementation, the specified condition includes at least one of the following: being in a specified wireless local area network, supporting a specified service type, meeting a specified service parameter, and supporting a specified function. In the solution provided in this application, device discovery may be used in different service scenarios, which may be customized based on a requirement of the first device. The solution has high applicability.

In a possible implementation, after the third device is discovered, the method further includes: receiving a notification message from the third device. The notification message includes service information of the third device. The service information of the third device indicates at least one of the following: an identifier of a wireless local area network in which the third device is located, a service type supported by the third device, a service parameter that can be met by the third device, and a function supported by the third device. The first device updates, based on the service information of the third device, service information that is of the N devices and that is stored in the first device. When the third device is disconnected from the network (also referred to as "going offline"), the third device updates the service information of the third device for another device in real time, to guarantee accuracy of the service information that is of the third device and that is in the first device.

In a possible implementation, the specified condition includes supporting a projection service.

In a possible implementation, the N devices include the third device, or the N devices do not include the third device. This is not limited in this application. Whether the third device receives the discovery request message from the first device is not limited in this application. According to this solution, as many devices as possible can be discovered, and a success rate and reliability of device discovery can be improved.

In a possible implementation, the N devices include the fourth device, or the N devices do not include the fourth device. This is not limited in this application. Whether the fourth device receives the discovery request message from the first device is not limited in this application. According to this solution, as many devices as possible can be discovered, and a success rate and reliability of device discovery can be improved.

In a possible implementation, the N devices include the fifth device, or the N devices do not include the fifth device. This is not limited in this application. Whether the fourth device receives the discovery request message from the first device is not limited in this application. According to this solution, as many devices as possible can be discovered, and a success rate and reliability of device discovery can be improved.

In a possible implementation, after the first device discovers the third device, the method further includes: The first device displays, on a discovered device interface, at least one piece of the following information: a device name of the third device, a device type of the third device, an identifier of the third device, and a device serial number of the third device.

According to a second aspect, a device discovery method is provided. The method is applied to a second device, and the second device is associated with a third device. The method includes: The second device receives, from a first device, a discovery request message that is used to discover a device that meets a specified condition. The discovery request message includes information indicating the specified condition. The second device sends, to the first device, a first response message that includes an identifier of the third device that meets the specified condition. The first response message is used by the first device to discover the third device.

In the solution provided in the second aspect, when determining that there is another device (for example, the third device) that meets the condition specified by the first device, a device (for example, the second device) that receives the discovery request message from the first device may notify the first device. In this way, the first device discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the second device is associated with the third device in advance.

In a possible implementation, the second device is associated with a fourth device. The first response message further includes an identifier of the fourth device that meets the specified condition. In this application, the second device that receives the discovery request message from the first device may send, to the first device by using the first response message, identifiers of a plurality of devices (for example, including the third device and the fourth device) that meet the condition specified by the first device and that are determined by the second device. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the second device is associated with the fourth device in advance.

In a possible implementation, in this application, the second device may send the first response message to the first device in a unicast manner. This can reduce the network overheads and reduce the network load.

In a possible implementation, that the second device is associated with a third device includes at least one of the following: the second device has been discovered by the third device, the second device has discovered the third device, the second device has established a connection to the third device, and the second device and the third device have provided a collaboration service together. In this application, the second device may learn service information of all devices associated with the second device, for example, a device that has been discovered by the second device, a device that has discovered the second device, a device that has established a connection to the second device, and a device that has provided a collaboration service together with the second device. This is not limited in this application.

In a possible implementation, the method further includes: A notification message is received from the third device. The notification message includes service information of the third device. The service information of the third device indicates at least one of the following: an identifier of a wireless local area network in which the third device is located, a service type supported by the third device, a service parameter that can be met by the third device, and a function supported by the third device. The first device updates, based on the service information of the third device, service information that is of the N devices and that is stored in the first device. When the third device is disconnected from the network (also referred to as "going offline"), the third device updates the service information of the third device for another device in real time, to guarantee accuracy of the service information that is of the third device and that is in the second device.

According to a third aspect, a first device is provided. The first device includes a transceiver unit, configured to: send, to N (N is a positive integer greater than or equal to 1) devices including a second device, a discovery request message that is used to discover a device that meets a specified condition, where the discovery request message includes information indicating the specified condition; receive, from a second device, a first response message that includes an identifier of a third device that meets the specified condition; and send, to the third device, a first status obtaining message that is used to obtain a status of the third device, where the status of the third device indicates whether the third device is in a working state; and a processing unit, configured to discover the third device when the working state of the third device is obtained.

In the solution provided in the third aspect, the first device (that is, a discovery device) attempts to discover a device by multicasting/broadcasting the discovery request message. When receiving the discovery request message from the first device and determining that there is another device (for example, the third device) that meets the condition specified by the first device, a device (for example, the second device) may notify the first device. In this way, the first device discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the first response message further includes an identifier of a fourth device that meets the specified condition. The transceiver unit is further configured to send, to the fourth device, a second status obtaining message that is used to obtain a status of the fourth device. The status of the fourth device indicates whether the fourth device is in a working state. The processing unit is further configured to discover the fourth device when the working state of the fourth device is obtained. In this application, the second device that receives the discovery request message from the first device may send, to the first device by using the first response message, identifiers of a plurality of devices (for example, including the third device and the fourth device) that meet the condition specified by the first device and that are determined by the second device. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the transceiver unit is further configured to: receive a second response message from the third device, where the second response message includes an identifier of a fifth device that meets the specified condition; and send, to the fifth device, a third status obtaining message that is used to obtain a status of the fifth device, where the status of the fifth device indicates whether the fifth device is in a working state. The processing unit is further configured to discover the fifth device when the first device obtains the working state of the fifth device. In this application, when determining that there is another device (for example, the fifth device) that meets the specified condition, the third device that is indirectly discovered by the first device by using the second device and that meets the specified condition may also notify the first device. In this way, the first device discovers the fifth device when determining, by using a keepalive probe, that the fifth device is in the working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, in this application, the transceiver unit of the first device may send, in a multicast or broadcast manner, the discovery request message to the N devices including the second device, and send the status obtaining message to a device (for example, the third device, the third device, or the fifth device) that meets the specified condition. For example, the transceiver unit sends the first status obtaining message to the third device in a unicast manner. For another example, the transceiver unit sends the second status obtaining message to the fourth device in the unicast manner. For still another example, the transceiver unit sends the third status obtaining message to the fifth device in the unicast manner. Further, the device (for example, the third device, the third device, or the fifth device) that meets the specified condition may send a response message to the first device in the unicast manner. For example, the second device sends the first response message to the first device in the unicast manner. The third device sends the second response message to the first device in the unicast manner. The fourth device sends a third response message to the first device in the unicast manner. The fifth device sends a fourth response message to the first device in the unicast manner. This can reduce the network overheads and reduce the network load.

In a possible implementation, the first device further includes a storage unit. The storage unit prestores service information of M devices. The processing unit is further configured to determine, before that a transceiver unit sends a discovery request message to N devices including a second device, based on the service information of the M devices, the N devices that meet the specified condition. M is a positive integer greater than or equal to N. According to the approach of discovering a device based on service information provided in this application, the first device may also determine, based on service information that is of a plurality of devices and that is prestored in the first device, devices to which the discovery request message is to be sent. According to this method, a success rate and reliability of device discovery can be improved, and a discovery procedure can be optimized.

In a possible implementation, the first response message further includes response information indicating that the second device is in the working state. The processing unit is further configured to discover the second device in response to the first response message. This application may also be compatible with a conventional device discovery mechanism. For example, a device (for example, the second device) that receives the discovery request message may also notify the first device when the device meets the specified condition. According to this method, a success rate and reliability of device discovery can be improved, and a discovery procedure can be optimized.

In a possible implementation, the specified condition includes at least one of the following: being in a specified wireless local area network, supporting a specified service type, meeting a specified service parameter, and supporting a specified function. In the solution provided in this application, device discovery may be used in different service scenarios, which may be customized based on a requirement of the first device. The solution has high applicability.

In a possible implementation, after the third device is discovered, the transceiver unit is further configured to receive a notification message from the third device. The notification message includes service information of the third device. The service information of the third device indicates at least one of the following: an identifier of a wireless local area network in which the third device is located, a service type supported by the third device, a service parameter that can be met by the third device, and a function supported by the third device. The processing unit is further configured to update, based on the service information of the third device, service information that is of the N devices and that is stored in the first device. When the third device is disconnected from the network (also referred to as "going offline"), the third device updates the service information of the third device for another device in real time, to guarantee accuracy of the service information that is of the third device and that is in the first device.

In a possible implementation, the specified condition means supporting a projection service.

In a possible implementation, the N devices include the third device, or the N devices do not include the third device. This is not limited in this application. Whether the third device receives the discovery request message from the first device is not limited in this application. According to this solution, as many devices as possible can be discovered, and a success rate and reliability of device discovery can be improved.

In a possible implementation, the N devices include the fourth device, or the N devices do not include the fourth device. This is not limited in this application. Whether the fourth device receives the discovery request message from the first device is not limited in this application. According to this solution, as many devices as possible can be discovered, and a success rate and reliability of device discovery can be improved.

In a possible implementation, the N devices include the fifth device, or the N devices do not include the fifth device. This is not limited in this application. Whether the fourth device receives the discovery request message from the first device is not limited in this application. According to this solution, as many devices as possible can be discovered, and a success rate and reliability of device discovery can be improved.

In a possible implementation, the first device further includes a display unit, configured to display a discovered device interface. The discovered device interface includes at least one piece of the following information: a device name of the third device, a device type of the third device, an identifier of the third device, and a device serial number of the third device.

According to a fourth aspect, a second device is provided. The second device is associated with a third device. The second device includes a transceiver unit, configured to: receive, from a first device, a discovery request message that is used to discover a device that meets a specified condition, where the discovery request message includes information indicating the specified condition; and send, to the first device, a first response message that includes an identifier of the third device that meets the specified condition, where the first response message is used by the first device to discover the third device.

In the solution provided in the fourth aspect, when determining that there is another device (for example, the third device) that meets the condition specified by the first device, a device (for example, the second device) that receives the discovery request message from the first device may notify the first device. In this way, the first device discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the second device is associated with the third device in advance.

In a possible implementation, the second device is associated with a fourth device. The first response message further includes an identifier of the fourth device that meets the specified condition. In this application, the second device that receives the discovery request message from the first device may send, to the first device by using the first response message, identifiers of a plurality of devices (for example, including the third device and the fourth device) that meet the condition specified by the first device and that are determined by the second device. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the second device is associated with the fourth device in advance.

In a possible implementation, in this application, the transceiver unit of the second device may send the first response message to the first device in a unicast manner. This can reduce the network overheads and reduce the network load.

In a possible implementation, that the second device is associated with a third device includes at least one of the following: the second device has been discovered by the third device, the second device has discovered the third device, the second device has established a connection to the third device, and the second device and the third device have provided a collaboration service together. In this application, the second device may learn service information of all devices associated with the second device, for example, a device that has been discovered by the second device, a device that has discovered the second device, a device that has established a connection to the second device, and a device that has provided a collaboration service together with the second device. This is not limited in this application.

In a possible implementation, the transceiver unit is further configured to receive a notification message from the third device. The notification message includes service information of the third device. The service information of the third device indicates at least one of the following: an identifier of a wireless local area network in which the third device is located, a service type supported by the third device, a service parameter that can be met by the third device, and a function supported by the third device. The processing unit is further configured to update, based on the service information of the third device, service information that is of the N devices and that is stored in the first device. When the third device is disconnected from the network (also referred to as "going offline"), the third device updates the service information of the third device for another device in real time, to guarantee accuracy of the service information that is of the third device and that is in the second device.

According to a fifth aspect, a first device is provided. The first device includes a memory, configured to store a computer program; a transceiver, configured to receive or send a radio signal; and a processor, configured to execute the computer program. In this way, the first device is enabled to: send, by using the transceiver, to N (N is a positive integer greater than or equal to 1) devices including a second device, a discovery request message that is used to discover a device that meets a specified condition, where the discovery request message includes information indicating the specified condition; receive, by using the transceiver, from the second device, a first response message that includes an identifier of a third device that meets the specified condition; and send, by using the transceiver, to the third device, a first status obtaining message that is used to obtain a status of the third device, where the status of the third device indicates whether the third device is in a working state. The first device is enabled to discover the third device when the working state of the third device is obtained.

In the solution provided in the fifth aspect, the first device (that is, a discovery device) attempts to discover a device by multicasting/broadcasting the discovery request message. When receiving the discovery request message from the first device and determining that there is another device (for example, the third device) that meets the condition specified by the first device, a device (for example, the second device) may notify the first device. In this way, the first device discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the first response message further includes an identifier of a fourth device that meets the specified condition. The transceiver is further configured to send, to the fourth device, a second status obtaining message that is used to obtain a status of the fourth device. The status of the fourth device indicates whether the fourth device is in a working state. The processor is further configured to discover the fourth device when the working state of the fourth device is obtained. In this application, the second device that receives the discovery request message from the first device may send, to the first device by using the first response message, identifiers of a plurality of devices (for example, including the third device and the fourth device) that meet the condition specified by the first device and that are determined by the second device. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the transceiver is further configured to: receive a second response message from the third device, where the second response message includes an identifier of a fifth device that meets the specified condition; and send, to the fifth device, a third status obtaining message that is used to obtain a status of the fifth device, where the status of the fifth device indicates whether the fifth device is in a working state. The processor is further configured to discover the fifth device when the first device obtains the working state of the fifth device. In this application, when determining that there is another device (for example, the fifth device) that meets the specified condition, the third device that is indirectly discovered by the first device by using the second device and that meets the specified condition may also notify the first device. In this way, the first device discovers the fifth device when determining, by using a keepalive probe, that the fifth device is in the working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, in this application, the transceiver of the first device may send, in a multicast or broadcast manner, the discovery request message to the N devices including the second device, and send the status obtaining message to a device (for example, the third device, the third device, or the fifth device) that meets the specified condition. For example, the transceiver sends the first status obtaining message to the third device in a unicast manner. For another example, the transceiver sends the second status obtaining message to the fourth device in the unicast manner. For still another example, the transceiver sends the third status obtaining message to the fifth device in the unicast manner. Further, the device (for example, the third device, the third device, or the fifth device) that meets the specified condition may send a response message to the first device in the unicast manner. For example, the second device sends the first response message to the first device in the unicast manner. The third device sends the second response message to the first device in the unicast manner. The fourth device sends a third response message to the first device in the unicast manner. The fifth device sends a fourth response message to the first device in the unicast manner. This can reduce the network overheads and reduce the network load.

In a possible implementation, the memory of the first device prestores service information of M devices. The processor is further configured to determine, before that the transceiver sends a discovery request message to N devices including a second device, based on the service information of the M devices, the N devices that meet the specified condition. M is a positive integer greater than or equal to N. According to the approach of discovering a device based on service information provided in this application, the first device may also determine, based on service information that is of a plurality of devices and that is prestored in the first device, devices to which the discovery request message is to be sent. According to this method, a success rate and reliability of device discovery can be improved, and a discovery procedure can be optimized.

In a possible implementation, the first response message further includes response information indicating that the second device is in the working state. The processor is further configured to discover the second device in response to the first response message. This application may also be compatible with a conventional device discovery mechanism. For example, a device (for example, the second device) that receives the discovery request message may also notify the first device when the device meets the specified condition. According to this method, a success rate and reliability of device discovery can be improved, and a discovery procedure can be optimized.

In a possible implementation, the specified condition includes at least one of the following: being in a specified wireless local area network, supporting a specified service type, meeting a specified service parameter, and supporting a specified function. In the solution provided in this application, device discovery may be used in different service scenarios, which may be customized based on a requirement of the first device. The solution has high applicability.

In a possible implementation, after the third device is discovered, the transceiver is further configured to receive a notification message from the third device. The notification message includes service information of the third device. The service information of the third device indicates at least one of the following: an identifier of a wireless local area network in which the third device is located, a service type supported by the third device, a service parameter that can be met by the third device, and a function supported by the third device. The processor is further configured to update, based on the service information of the third device, service information that is of the N devices and that is stored in the first device. When the third device is disconnected from the network (also referred to as "going offline"), the third device updates the service information of the third device for another device in real time, to guarantee accuracy of the service information that is of the third device and that is in the first device.

In a possible implementation, the specified condition includes supporting a projection service.

In a possible implementation, the N devices include the third device, or the N devices do not include the third device. This is not limited in this application. Whether the third device receives the discovery request message from the first device is not limited in this application. According to this solution, as many devices as possible can be discovered, and a success rate and reliability of device discovery can be improved.

In a possible implementation, the N devices include the fourth device, or the N devices do not include the fourth device. This is not limited in this application. Whether the fourth device receives the discovery request message from the first device is not limited in this application. According to this solution, as many devices as possible can be discovered, and a success rate and reliability of device discovery can be improved.

In a possible implementation, the N devices include the fifth device, or the N devices do not include the fifth device. This is not limited in this application. Whether the fourth device receives the discovery request message from the first device is not limited in this application. According to this solution, as many devices as possible can be discovered, and a success rate and reliability of device discovery can be improved.

In a possible implementation, the first device further includes a display, configured to display a discovered device interface. The discovered device interface includes at least one piece of the following information: a device name of the third device, a device type of the third device, an identifier of the third device, and a device serial number of the third device.

According to a sixth aspect, a second device is provided. The second device is associated with a third device. The second device includes a memory, configured to store a computer program; a transceiver, configured to receive or send a radio signal; and a processor, configured to execute the computer program. In this way, the second device is enabled to: receive, by using the transceiver, from a first device, a discovery request message that is used to discover a device that meets a specified condition, where the discovery request message includes information indicating the specified condition; and send, to the first device, a first response message that includes an identifier of the third device that meets the specified condition, where the first response message is used by the first device to discover the third device.

In the solution provided in the sixth aspect, when determining that there is another device (for example, the third device) that meets the condition specified by the first device, a device (for example, the second device) that receives the discovery request message from the first device may notify the first device. In this way, the first device discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the second device is associated with the third device in advance.

In a possible implementation, the second device is associated with a fourth device. The first response message further includes an identifier of the fourth device that meets the specified condition. In this application, the second device that receives the discovery request message from the first device may send, to the first device by using the first response message, identifiers of a plurality of devices (for example, including the third device and the fourth device) that meet the condition specified by the first device and that are determined by the second device. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the second device is associated with the fourth device in advance.

In a possible implementation, in this application, a transceiver unit of the second device may send the first response message to the first device in a unicast manner. This can reduce the network overheads and reduce the network load.

In a possible implementation, that the second device is associated with a third device includes at least one of the following: the second device has been discovered by the third device, the second device has discovered the third device, the second device has established a connection to the third device, and the second device and the third device have provided a collaboration service together. In this application, the second device may learn service information of all devices associated with the second device, for example, a device that has been discovered by the second device, a device that has discovered the second device, a device that has established a connection to the second device, and a device that has provided a collaboration service together with the second device. This is not limited in this application.

In a possible implementation, the transceiver is further configured to receive a notification message from the third device. The notification message includes service information of the third device. The service information of the third device indicates at least one of the following: an identifier of a wireless local area network in which the third device is located, a service type supported by the third device, a service parameter that can be met by the third device, and a function supported by the third device. The processor is further configured to update, based on the service information of the third device, service information that is of the N devices and that is stored in the first device. When the third device is disconnected from the network (also referred to as "going offline"), the third device updates the service information of the third device for another device in real time, to guarantee accuracy of the service information that is of the third device and that is in the second device.

According to a seventh aspect, a device discovery method is provided, and the method is applied to a communication system. The communication system includes a first device and N devices. The method includes: The first device sends, to N (N is a positive integer greater than or equal to 1) devices including a second device, a discovery request message that is used to discover a device that meets a specified condition. The discovery request message includes information indicating the specified condition. The second device receives the discovery request message from the first device. The second device sends, to the first device, a first response message that includes an identifier of the third device that meets the specified condition. The first response message is used by the first device to discover the third device. The first device receives the first response message from the second device. The first device sends, to the third device, a first status obtaining message that is used to obtain a status of the third device. The status of the third device indicates whether the third device is in a working state. The first device discovers the third device when the working state of the third device is obtained.

In the solution provided in the seventh aspect, the first device (that is, a discovery device) attempts to discover a device by multicasting/broadcasting the discovery request message. When receiving the discovery request message from the first device and determining that there is another device (for example, the third device) that meets the condition specified by the first device, a device (for example, the second device) may notify the first device. In this way, the first device discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the communication system further includes a fourth device. The first response message further includes an identifier of the fourth device that meets the specified condition. The method further includes: The first device sends, to the fourth device, a second status obtaining message that is used to obtain a status of the fourth device. The status of the fourth device indicates whether the fourth device is in a working state. The first device discovers the fourth device when the working state of the fourth device is obtained. In this application, the second device that receives the discovery request message from the first device may send, to the first device by using the first response message, identifiers of a plurality of devices (for example, including the third device and the fourth device) that meet the condition specified by the first device and that are determined by the second device. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, in this application, the first device may send, in a multicast or broadcast manner, the discovery request message to the N devices including the second device, and send the status obtaining message to a device (for example, the third device, the third device, or the fifth device) that meets the specified condition. For example, the first status obtaining message is sent to the third device in a unicast manner. For another example, the second status obtaining message is sent to the fourth device in the unicast manner. For still another example, a third status obtaining message is sent to the fifth device in the unicast manner. Further, the device (for example, the third device, the third device, or the fifth device) that meets the specified condition may send a response message to the first device in the unicast manner. For example, the second device sends the first response message to the first device in the unicast manner. The third device sends the second response message to the first device in the unicast manner. The fourth device sends a third response message to the first device in the unicast manner. The fifth device sends a fourth response message to the first device in the unicast manner. This can reduce the network overheads and reduce the network load.

In a possible implementation, that the second device is associated with a third device includes at least one of the following: the second device has been discovered by the third device, the second device has discovered the third device, the second device has established a connection to the third device, and the second device and the third device have provided a collaboration service together. In this application, the second device may learn service information of all devices associated with the second device, for example, a device that has been discovered by the second device, a device that has discovered the second device, a device that has established a connection to the second device, and a device that has provided a collaboration service together with the second device. This is not limited in this application.

In a possible implementation, the communication system further includes a fifth device. The method further includes: The first device receives the second response message from the third device. The second response message includes an identifier of the fifth device that meets the specified condition. The first device sends, to the fifth device, the third status obtaining message that is used to obtain a status of the fifth device. The status of the fifth device indicates whether the fifth device is in a working state. The first device discovers the fifth device when the working state of the fifth device is obtained. In this application, when determining that there is another device (for example, the fifth device) that meets the specified condition, the third device that is indirectly discovered by the first device by using the second device and that meets the specified condition may also notify the first device. In this way, the first device discovers the fifth device when determining, by using a keepalive probe, that the fifth device is in the working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, after the third device is discovered, the method further includes: The first device receives a notification message from the third device, where the notification message includes service information of the third device, and the service information of the third device indicates at least one of the following: an identifier of a wireless local area network in which the third device is located, a service type supported by the third device, a service parameter that can be met by the third device, and a function supported by the third device, and updates, based on the service information of the third device, service information that is of the N devices and that is stored in the first device. When the third device is disconnected from the network (also referred to as "going offline"), the third device updates the service information of the third device for another device in real time, to guarantee accuracy of the service information that is of the third device and that is in the first device.

In a possible implementation, the specified condition includes supporting a projection service.

In a possible implementation, the N devices include the third device, or the N devices do not include the third device. This is not limited in this application. Whether the third device receives the discovery request message from the first device is not limited in this application. According to this solution, as many devices as possible can be discovered, and a success rate and reliability of device discovery can be improved.

In a possible implementation, the N devices include the fourth device, or the N devices do not include the fourth device. This is not limited in this application. Whether the fourth device receives the discovery request message from the first device is not limited in this application. According to this solution, as many devices as possible can be discovered, and a success rate and reliability of device discovery can be improved.

In a possible implementation, the N devices include the fifth device, or the N devices do not include the fifth device. This is not limited in this application. Whether the fourth device receives the discovery request message from the first device is not limited in this application. According to this solution, as many devices as possible can be discovered, and a success rate and reliability of device discovery can be improved.

In a possible implementation, after the first device discovers the third device, the method further includes: The first device displays, on a discovered device interface, at least one piece of the following information: a device name of the third device, a device type of the third device, an identifier of the third device, and a device serial number of the third device.

According to an eighth aspect, a communication system is provided. The communication system includes the first device and the N devices according to any possible implementation of the third aspect or the fifth aspect. The N devices include the second device according to any possible implementation of the fourth aspect or the sixth aspect. The first device is configured to: send, to the N (N is a positive integer greater than or equal to 1) devices including the second device, a discovery request message that is used to discover a device that meets a specified condition, where the discovery request message includes information indicating the specified condition; receive a first response message from the second device; send, to a third device, a first status obtaining message that is used to obtain a status of the third device, where the status of the third device indicates whether the third device is in a working state; and discover the third device when the working state of the third device is obtained. The second device is configured to receive the discovery request message from the first device. The second device sends, to the first device, the first response message that includes an identifier of the third device that meets the specified condition. The first response message is used by the first device to discover the third device.

In the solution provided in the eighth aspect, the first device (that is, a discovery device) attempts to discover a device by multicasting/broadcasting the discovery request message. When receiving the discovery request message from the first device and determining that there is another device (for example, the third device) that meets the condition specified by the first device, a device (for example, the second device) may notify the first device. In this way, the first device discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, the first response message further includes an identifier of a fourth device that meets the specified condition. The first device is further configured to: send, to the fourth device, a second status obtaining message that is used to obtain a status of the fourth device, where the status of the fourth device indicates whether the fourth device is in a working state; and discover the fourth device when the working state of the fourth device is obtained. In this application, the second device that receives the discovery request message from the first device may send, to the first device by using the first response message, identifiers of a plurality of devices (for example, including the third device and the fourth device) that meet the condition specified by the first device and that are determined by the second device. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, in this application, the first device may send, in a multicast or broadcast manner, the discovery request message to the N devices including the second device, and send the status obtaining message to a device (for example, the third device, the third device, or the fifth device) that meets the specified condition. For example, the first status obtaining message is sent to the third device in a unicast manner. For another example, the second status obtaining message is sent to the fourth device in the unicast manner. For still another example, a third status obtaining message is sent to the fifth device in the unicast manner. Further, the device (for example, the third device, the third device, or the fifth device) that meets the specified condition may send a response message to the first device in the unicast manner. For example, the second device sends the first response message to the first device in the unicast manner. The third device sends a second response message to the first device in the unicast manner. The fourth device sends a third response message to the first device in the unicast manner. The fifth device sends a fourth response message to the first device in the unicast manner. This can reduce the network overheads and reduce the network load.

In a possible implementation, the second device is associated with the third device. This includes at least one of the following: the second device has been discovered by the third device, the second device has discovered the third device, the second device has established a connection to the third device, and the second device and the third device have provided a collaboration service together. In this application, the second device may learn service information of all devices associated with the second device, for example, a device that has been discovered by the second device, a device that has discovered the second device, a device that has established a connection to the second device, and a device that has provided a collaboration service together with the second device. This is not limited in this application.

In a possible implementation, the first device is further configured to: receive the second response message from the third device, where the second response message includes an identifier of the fifth device that meets the specified condition; send, to the fifth device, the third status obtaining message that is used to obtain a status of the fifth device, where the status of the fifth device indicates whether the fifth device is in a working state; and discover the fifth device when the working state of the fifth device is obtained. In this application, when determining that there is another device (for example, the fifth device) that meets the specified condition, the third device that is indirectly discovered by the first device by using the second device and that meets the specified condition may also notify the first device. In this way, the first device discovers the fifth device when determining, by using a keepalive probe, that the fifth device is in the working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

In a possible implementation, after the third device is discovered, the first device is further configured to: receive a notification message from the third device, where the notification message includes service information of the third device, and the service information of the third device indicates at least one of the following: an identifier of a wireless local area network in which the third device is located, a service type supported by the third device, a service parameter that can be met by the third device, and a function supported by the third device; and update, based on the service information of the third device, service information that is of the N devices and that is stored in the first device. When the third device is disconnected from the network (also referred to as "going offline"), the third device updates the service information of the third device for another device in real time, to guarantee accuracy of the service information that is of the third device and that is in the first device.

In a possible implementation, the specified condition includes supporting a projection service.

In a possible implementation, the N devices include the third device, or the N devices do not include the third device. This is not limited in this application. Whether the third device receives the discovery request message from the first device is not limited in this application. According to this solution, as many devices as possible can be discovered, and a success rate and reliability of device discovery can be improved.

In a possible implementation, the N devices include the fourth device, or the N devices do not include the fourth device. This is not limited in this application. Whether the fourth device receives the discovery request message from the first device is not limited in this application. According to this solution, as many devices as possible can be discovered, and a success rate and reliability of device discovery can be improved.

In a possible implementation, the N devices include the fifth device, or the N devices do not include the fifth device. This is not limited in this application. Whether the fourth device receives the discovery request message from the first device is not limited in this application. According to this solution, as many devices as possible can be discovered, and a success rate and reliability of device discovery can be improved.

In a possible implementation, the first device is further configured to display, on a discovered device interface, at least one piece of the following information: a device name of the third device, a device type of the third device, an identifier of the third device, and a device serial number of the third device.

According to a ninth aspect, a computer-readable storage medium is provided. The computer-readable storage medium includes a computer program. When the computer program is run on an electronic device, the electronic device is enabled to perform the method according to any possible implementation of the first aspect or the second aspect.

According to a tenth aspect, a chip system is provided. The chip system includes a processor and a memory. The memory stores computer program code. When the computer program code is executed by the processor, the processor is enabled to implement the method according to any possible implementation of the first aspect or the second aspect. The chip system may include a chip, or may include a chip and another discrete component.

According to an eleventh aspect, a computer program product is provided. When the computer program product is run on an electronic device, the electronic device is enabled to perform the method according to any possible implementation of the first aspect or the second aspect.

### BRIEF DESCRIPTION OF DRAWINGS

FIG. 1(a) and FIG. 1(b) are a diagram of an example of a device discovery scenario based on a multicast/broadcast technology;
FIG. 2 is a diagram of a comparison between results of device discovery based on a multicast/broadcast technology;
FIG. 3 is a diagram of an architecture of a distributed device cluster according to an embodiment of this application;
FIG. 4 is a schematic diagram of a hardware structure of a terminal device according to an embodiment of this application;
FIG. 5 is a schematic diagram of a software structure of a terminal device according to an embodiment of this application;
FIG. 6 is a diagram of an example of interactions in a device discovery procedure according to an embodiment of this application;
FIG. 7 is a flowchart of a device discovery method according to an embodiment of this application;
FIG. 8 is a diagram of an example of interactions in a discovery request phase according to an embodiment of this application;
FIG. 9 is a diagram 1 of an example of interactions in a unicast reply phase according to an embodiment of this application;
FIG. 10 is a diagram 2 of an example of interactions in a unicast reply phase according to an embodiment of this application;
FIG. 11 is a diagram 3 of an example of interactions in a unicast reply phase according to an embodiment of this application;
FIG. 12 is a diagram of an example of interactions in a keepalive probe phase according to an embodiment of this application;
FIG. 13 is a diagram of an example of a discovered device interface according to an embodiment of this application;
FIG. 14 is a diagram of an example of interactions in an offline notification phase according to an embodiment of this application; and
FIG. 15 is a schematic diagram of composition of a structure of an electronic device according to an embodiment of this application.

### DESCRIPTION OF EMBODIMENTS

The following describes the technical solutions of embodiments of this application with reference to the accompanying drawings in embodiments of this application. In the descriptions in embodiments of this application, "/" means "or" unless otherwise specified. For example, A/B may represent A or B. In this specification, "and/or" is merely an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more (including two).

An embodiment of this application provides a device discovery method. The method is applied to a procedure in which a plurality of devices cooperate to serve a user in a distributed device cluster.

An application scenario of the device discovery method is not limited in this embodiment of this application. For example, the device discovery method according to this embodiment of this application may be applied to but is not limited to scenarios such as a home scenario, a driving scenario, a medical and health scenario, and an office scenario.

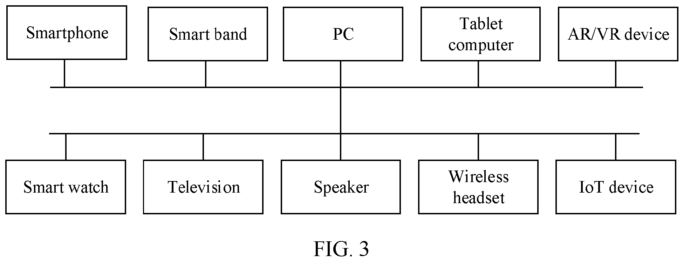

The home scenario is used as an example. For example, the distributed device cluster may include a smartphone, a television, a wireless headset, a smart watch, a smart band, a speaker, a personal computer (personal computer, PC) (for example, a notebook computer, a desktop computer, an ultra-mobile personal computer (ultra-mobile personal computer, UMPC), or the like), a tablet computer, an augmented reality (augmented reality, AR)/virtual reality (virtual reality, VR) device, and an Internet of Things (Internet of things, IoT) device (such as a smart home device) shown in FIG. 3. The IoT device is an important part of future development of the information technology. A main technical feature of the IoT device is that things are connected to a network by using a communication technology, to implement an intelligent network of human-machine interconnection and thing-thing interconnection.

For example, the IoT device may include but is not limited to a device such as an alarm or a smart lock for security protection, a device such as a smart desk lamp for lighting, a device such as a fresh air system, an air conditioner, a refrigerator, an air purifier, or an air quality sensor for health, a device such as a dishwasher or a sterilizing cabinet of kitchen appliances, a device such as an electric curtain for home decoration, or a device such as a sweeping robot for cleaning.

It should be noted that FIG. 3 in this application is merely an example an architecture of a distributed device cluster. A specific architecture of the distributed device cluster is not limited in this application.

For example, the distributed device cluster may include "1+8+N" terminal products. The "1+8+N" terminal products are used to build a fifth-generation mobile communication technology (fifth-generation, 5G)-based seamless AI life, a next-generation communication technology, and the like. For example, "1" represents a smartphone, which is an entrance to the future AI life. "8" represents a tablet computer, a PC, a wearable device, a high-definition (high-definition, HD) device, an artificial intelligence (artificial intelligence, AI) speaker, a headset, an AR/VR device, and a vehicle-mounted device. "N" represents an IoT device, such as a smart home device.

In this embodiment of this application, multi-device collaboration means that a plurality of devices (for example, terminal devices in the distributed device cluster) collaborate to provide a cross-platform and cross-system service.

For example, multi-device collaboration may provide a multi-screen collaboration (multi-screen collaboration) service. For example, the multi-screen collaboration service may be projection (for example, video projection and image projection), remote screen control, or the like. In an example, a multi-screen collaboration projection manner may include but is not limited to a same-source projection manner, a different-source projection manner, and the like. This is not limited in this embodiment of this application.

For another example, multi-device collaboration may provide a distributed audio collaboration output service. In an example, in distributed audio collaboration output, an audio may be transferred from a device A to a device B, and the audio may perform switching adaptively based on a distributed display status of an interface. This is not limited in this embodiment of this application.

For another example, multi-device collaboration may provide file sharing. For example, images, videos, audio files, and the like may be shared between a plurality of devices by using a device sharing service such as Huawei Share. For another example, exercise data (for example, a speed and exercise time), physical indicators (for example, a heart rate and blood pressure), sleep indicators (for example, time when falling asleep, total sleep duration, and deep sleep continuity) may be shared between a wearable device (for example, a smart watch and a smart band) and a portable device (for example, a smartphone and a tablet computer) by using a device sharing service such as a Health service.

In this embodiment of this application, a necessary phase for multi-device collaboration is device discovery. For example, device discovery is initiated by a discovery device. Device discovery is used to discover a device (that is, a discovered device) that can provide a specified service, so that the discovered device can cooperate with the discovery device, to provide services such as projection (for example, video projection and image projection), remote screen control, projection, and file sharing.

The discovery device and the discovered device may be random devices in the distributed device cluster. For example, the discovery device and the discovered device may include but are not limited to a desktop device, a laptop device, a handheld device, a wearable device, a smart home device, a computing device, a vehicle-mounted device, and a machine-mounted device, for example, a smartphone, a netbook, a tablet computer, a smart watch, a smart band, a call watch, a PC, a wireless headset, a television, a speaker, a smart camera, a somatic game machine, a personal digital assistant, (personal digital assistant, PDA), a portable multimedia player (portable multimedia player, PMP), an AR/VR device, a session initiation protocol (session initiation protocol, SIP) phone, an IoT terminal device, a wireless device in a smart city (smart city), a wireless device in a smart home (smart home). This is not limited in this application.

The architecture of the distributed device cluster shown in FIG. 3 is used as an example. The discovery device and the discovered device may be random devices in the distributed device cluster shown in FIG. 3, for example, a smartphone, a tablet computer, and a PC.

In a distributed device cluster, there may be a plurality of devices that can provide a specified service. Therefore, using the architecture of the distributed device cluster shown in FIG. 3 as an example, discovered devices that may be discovered by the discovery device through device discovery may include any one or more devices in the distributed device cluster shown in FIG. 3, for example, the smartphone, the tablet computer, and the PC. In other words, the discovery device may discover, through device discovery, one or more discovered devices that can provide a specified service.

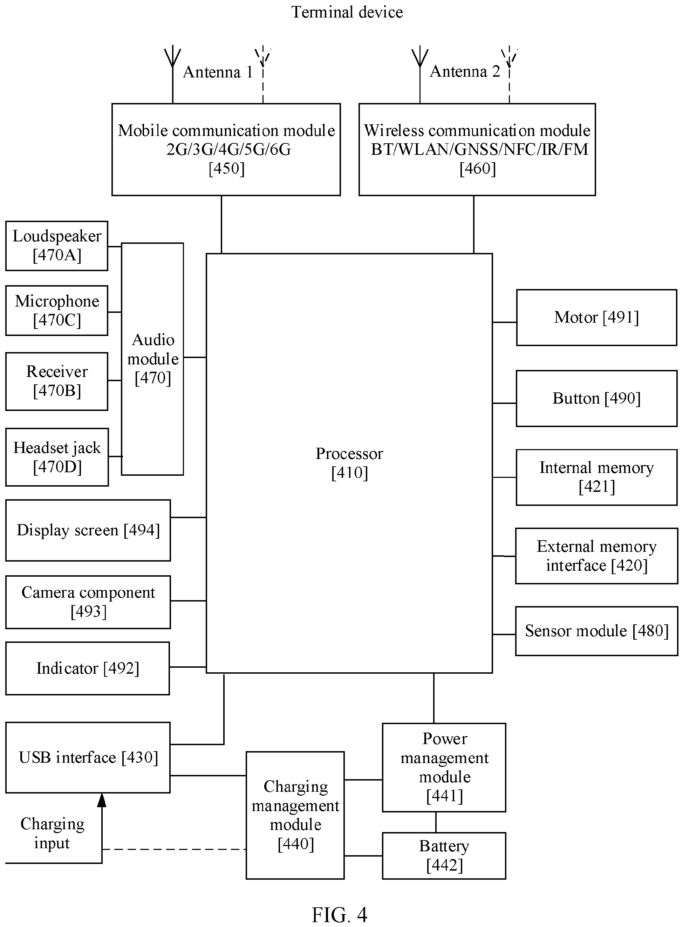

FIG. 4 is a schematic diagram of a hardware structure of a terminal device according to an embodiment of this application. The terminal device may be a discovery device or a discovered device. As shown in FIG. 4, the terminal device may include a processor 410, a memory (including an external memory interface 420 and an internal memory 421), a universal serial bus (universal serial bus, USB) interface 430, a charging management module 440, a power management module 441, a battery 442, an antenna 1, an antenna 2, a mobile communication module 450, a wireless communication module 460, an audio module 470, a loudspeaker 470A, a receiver 470B, a microphone 470C, a headset jack 470D, a sensor module 480, a button 490, a motor 491, an indicator 492, a camera component 493, a display screen 494, and the like. The sensor module 480 may include a gyroscope sensor, an acceleration sensor, a magnetic sensor, a touch sensor, a fingerprint sensor, a pressure sensor, a barometric pressure sensor, a distance sensor, an optical proximity sensor, a temperature sensor, an ambient light sensor, a bone-conduction sensor, and the like.

It may be understood that the structure illustrated in this embodiment of the present invention does not constitute a specific limitation on the terminal device. In some other embodiments of this application, the terminal device may include more or fewer components than those shown in the figure, or some components may be combined, or some components may be split, or there may be a different component layout. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 410, and is configured to store instructions and data. In some embodiments, the memory in the processor 410 is a cache. The memory may store instructions or data just used or cyclically used by the processor 410. If the processor 410 needs to use the instructions or the data again, the processor may directly invoke the instructions or the data from the memory. This avoids repeated access, reduces waiting time of the processor 410, and improves system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous transceiver (universal asynchronous receiver/transmitter, UART) interface, a mobile industry processor interface (mobile industry processor interface, MIPI), a general-purpose input/output (general-purpose input/output, GPIO) interface, a universal serial bus (universal serial bus, USB) interface, and/or the like.

The charging management module 440 is configured to receive charging input from a charger. The power management module 441 is configured to connect to the battery 442, the charging management module 440, and the processor 410. The power management module 441 receives input of the battery 442 and/or the charging management module 440, to supply power to the processor 410, the internal memory 421, the display screen 494, the camera component 493, the wireless communication module 460, and the like.

A wireless communication function of the terminal device may be implemented by using the antenna 1, the antenna 2, the mobile communication module 450, the wireless communication module 460, the modem processor, the baseband processor, and the like.

The antenna 1 and the antenna 2 are configured to transmit and receive an electromagnetic wave signal. Each antenna of the terminal device may be configured to cover one or more communication frequency bands. Different antennas may also be multiplexed to improve antenna utilization. For example, the antenna 1 may be multiplexed as a diversity antenna of a wireless local area network. In some other embodiments, the antennas may be used in conjunction with a tuning switch.

The mobile communication module 450 may provide a wireless communication solution that is applied to the terminal device and that includes 2G/3G/4G/5G/6G. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering and amplification on the received electromagnetic wave, and transmit a processed electromagnetic wave to the modem processor for demodulation. The mobile communication module 450 may further amplify a signal modulated by the modem processor, and convert an amplified signal into an electromagnetic wave for radiation through the antenna 1. In some embodiments, at least some functional modules of the mobile communication module 450 may be disposed in the processor 410. In some embodiments, at least some functional modules of the mobile communication module 450 and at least some modules of the processor 410 may be disposed in a same component.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and is then transferred to the application processor. The application processor outputs a sound signal by using an audio device (not limited to the loudspeaker 470A, the receiver 470B, or the like), or displays an image or a video by using the display screen 494. In some embodiments, the modem processor may be an independent device. In some other embodiments, the modem processor may be independent of the processor 410, and disposed in a same device with the mobile communication module 450 or another functional module.

The wireless communication module 460 may provide a wireless communication solution that is applied to the terminal device and that includes a wireless local area network (wireless local area network, WLAN) (such as a Wi-Fi network), Bluetooth, BT, a global navigation satellite system (global navigation satellite system, GNSS), frequency modulation (frequency modulation, FM), a near field communication technology (near field communication, NFC), an infrared technology (infrared, IR), and the like. The wireless communication module 460 may be one or more components that integrate at least one communication processing module. The wireless communication module 460 receives an electromagnetic wave through the antenna 2, performs frequency modulation and filtering on an electromagnetic wave signal, and sends a processed signal to the processor 410. The wireless communication module 460 may further receive a to-be-sent signal from the processor 410, perform frequency modulation and amplification on the signal, and convert a processed signal into an electromagnetic wave for radiation through the antenna 2.

In some embodiments, in the terminal device, the antenna 1 is coupled to the mobile communication module 450, and the antenna 2 is coupled to the wireless communication module 460, so that the terminal device may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (new radio, NR), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), a satellite based augmentation system (satellite based augmentation system, SBAS), and/or the like.

In this embodiment of this application, the wireless communication module 460 and the antenna 1 may be configured to support a discovery device to send a discovery request message, receive and process a response message, send a status obtaining message, send notification information, and support a device to receive and process the discovery request message, send the response message, receive and process the status obtaining message, and receive and process the notification information.

The terminal device implements a display function by using the GPU, the display screen 494, the application processor, and the like. The GPU is an image processing microprocessor, and is connected to the display screen 494 and the application processor. The GPU is configured to perform mathematical and geometric calculations, and render an image. The processor 410 may include one or more GPUs that execute program instructions to generate or change display information.

In this embodiment of this application, the GPU, the display screen 494, and the application processor may be configured to support the discovery device to render and display a discovered device interface.

The display screen 494 is configured to display an image, a video, or the like. The display screen 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device may include one or K display screens 494. K is a positive integer greater than 1.

The terminal device may implement a photographing function through the ISP, the camera component 493, the video codec, the GPU, the display screen 494, the application processor, or the like.

The external memory interface 420 may be configured to connect to an external storage card, for example, a micro SD card, to extend a storage capability of the terminal device. The external storage card communicates with the processor 410 through the external memory interface 420, to implement a data storage function. For example, files such as music or videos are stored in the external storage card.

The internal memory 421 may be configured to store computer-executable program code, and the executable program code includes instructions. The internal memory 421 may include a program storage area and a data storage area. The program storage area may store an operating system, an application required by at least one function (for example, a sound playing function or an image playing function), and the like. The data storage area may store data (for example, audio data and a phone book) created when the terminal device is used. In addition, the internal memory 421 may include a high-speed random access memory, and may further include a nonvolatile memory, for example, at least one magnetic disk storage device, a flash memory, or a universal flash storage (universal flash storage, UFS). The processor 410 runs the instructions stored in the internal memory 421, and/or the instructions stored in the memory disposed in the processor, to perform various functional applications of the terminal device and data processing.

In this embodiment of this application, the internal memory 421 may include and maintain service information of one or more devices.

The terminal device may implement audio functions such as music playing and recording by using the audio module 470, the loudspeaker 470A, the receiver 470B, the microphone 470C, the application processor, and the like. For specific working principles and functions of the audio module 470, the loudspeaker 470A, the receiver 470B, and the microphone 470C, refer to descriptions for the conventional technology.

The button 490 includes a power button, a volume button, and the like. The button 490 may be a mechanical button, or may be a touch button. The terminal device may receive button input, and generate button signal input related to user settings and function control of the terminal device.

It should be noted that the hardware modules included in the terminal device shown in FIG. 4 are merely described as an example, and do not constitute a limitation on a specific structure of the terminal device. For example, if the terminal device is a smartphone, the terminal device may further include a subscriber identity module (subscriber identity module, SIM) interface. If the terminal device is a television, the terminal device may further include components such as a remote control component. If the terminal device is a PC, the terminal device may further include components such as a keyboard and a mouse.

In this application, an operating system of the terminal device may include but is not limited to operating systems such as Symbian^{®} (Symbian^{®}), Android^{®} (Android^{®}), Microsoft Windows^{®}, Apple iOS^{®}, Blackberry^{®} (Blackberry^{®}), and Harmony OS^{®}.

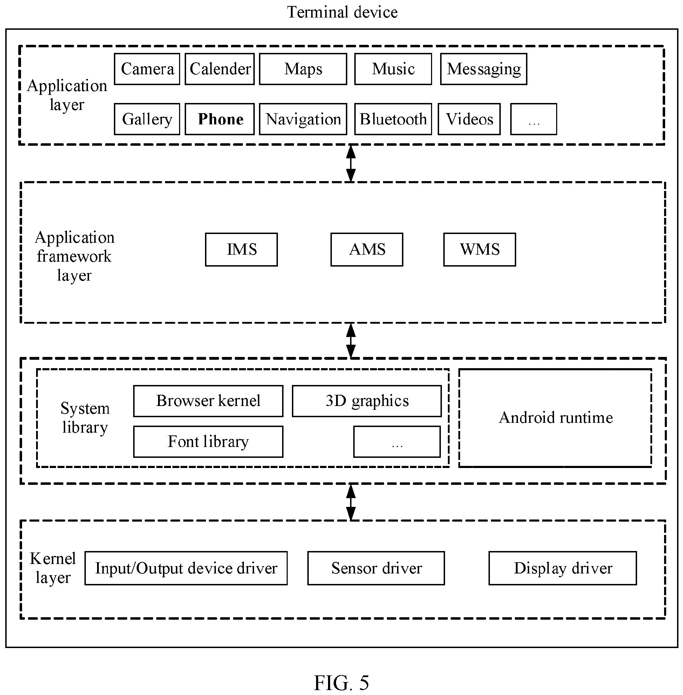

A terminal device using an Android^{®} system with a layered architecture is used as an example. As shown in FIG. 5, software of the terminal device may be divided into several layers, and each layer has a clear role and task. Layers communicate with each other through a software interface. As shown in FIG. 5, a software structure of the terminal device may be divided into three layers from top to bottom: an application layer (APP layer for short); an application framework layer (framework layer for short); a system library; and Android runtime and a kernel layer (also referred to as a driver layer).

The application layer may include a series of application packages, for example, applications such as Camera, Gallery, Calendar, Phone, Maps, Navigation, Bluetooth, Music, Videos, and Messaging. For ease of description, the application is referred to APP for short in the following.

The application framework layer provides an application programming interface (application programming interface, API) and a programming framework for applications of the application layer. As shown in FIG. 5, the application framework layer may include a window manager service (window manager service, WMS), an activity manager service (activity manager service, AMS), and an input event manager service (input manager service, IMS). In some embodiments, the application framework layer may further include a content provider, a view system, a phone manager, a resource manager, a notification manager, and the like (not shown in FIG. 5).

The system library and Android runtime include functions that need to be invoked by the FWK, an Android core library, and an Android virtual machine. The system library may include a plurality of functional modules, for example, a browser kernel, three-dimensional (3 dimensional, 3D) graphics, and a font library.

The system library may include a plurality of functional modules, for example, a surface manager (surface manager), a media library (media libraries), a three-dimensional graphics processing library (such as OpenGL ES), and a 2D graphics engine (such as SGL).

The kernel layer is a layer between hardware and software. The kernel layer may include a display driver, an input/output device driver (for example, a keyboard, a touchscreen, a headset, a loudspeaker, or a microphone), a device node, a camera driver, an audio driver, a sensor driver, and the like. A user performs an input operation by using an input device. The kernel layer may generate a corresponding original input event based on the input operation, and store the original input event in the device node. The input/output device driver can detect an input event of the user. For example, a microphone may detect a voice made by a user.

It should be noted that FIG. 5 only shows an example of an Android^{®} system with the layered architecture, to describe a software structure of the terminal device. A specific architecture of the software system of the terminal device is not limited in this application. For specific descriptions of a software system of another architecture, refer to the conventional technology.

FIG. 4 and FIG. 5 are examples to respectively show a hardware structure and a software architecture of the terminal device. The foregoing hardware structure and software architecture are applicable to a first device, a second device, a third device, and the like. This is not limited in this application.

It may be understood that, an advantage of multicast/broadcast is that network overheads can be reduced, and an advantage of unicast is that unicast is reliable. In view of this, in a device discovery method provided in embodiments of this application, multicast/broadcast scanning and unicast interaction may be used, to guarantee reliability of device discovery, reduce network overheads, and reduce network load.

In a specific example, the device discovery method provided in embodiments of this application may mainly include the following four phases.

### Phase 1: Discovery request phase

In the discovery request phase, a discovery device (referred to as a "first device") sends a discovery request message to one or more devices, to discover a device that meets a condition specified by the first device.

### Phase 2: Unicast reply phase

It may be understood that collaboration between terminal devices overlaps to some extent. For example, a second device has collaborated with a third device, and the second device has collaborated with a fourth device. Therefore, it is assumed that the terminal devices may share respective service information (for example, supported service types). One device may learn service information of another device. For example, the second device learns service types supported by the third device and the fourth device. In view of this, in a device discovery procedure, the discovery device may learn service information of a device (for example, the third device) from the device, and may alternatively obtain the service information of the device from another device (for example, the second device) associated with the device.

In this embodiment of this application, another device associated with the second device may include but is not limited to a device that has been discovered by the second device, a device that has discovered the second device, a device that has established a connection to the second device, and a device that has provided a collaboration service together with the second device. This is not limited in this application.

In view of this, in this embodiment of this application, in the unicast reply phase, the second device notifies the first device of information that is known to the second device and that is about the another device (for example, the third device) that meets the condition specified by the first device. The second device is any device that is in the plurality of devices and that receives the discovery request message from the first device.

### Phase 3: Keepalive probe phase

In the keepalive probe phase, a unicast probe is used to determine whether the device (for example, the third device) that meets the condition specified by the first device is in a working state. For example, if the third device is in the working state, the third device responds to the unicast probe.

In this embodiment of this application, an example may be used for understanding that a device is in a working state. For example, if the device is powered off or disconnected from the network, the device is not in the working state. If the device is in a sleep state, but the device can be woken up at any time to perform communication, the device is in the working state.

### Phase 4: Device discovery phase

In the device discovery phase, the first device discovers the device, for example, the third device, that meets the condition specified by the first device.

In some embodiments, further, to guarantee accuracy of a device discovery result, the device discovery method provided in embodiments of this application may further include the following.

### Phase 5: Offline notification phase

In the offline notification phase, when the discovery device is disconnected from the network (also referred to as "going offline"), another device is notified.

Further, in some embodiments, in the phase 5, when the discovered device is disconnected from the network (also referred to as "going offline"), the discovered device further updates the service information of the third device for another device in real time.

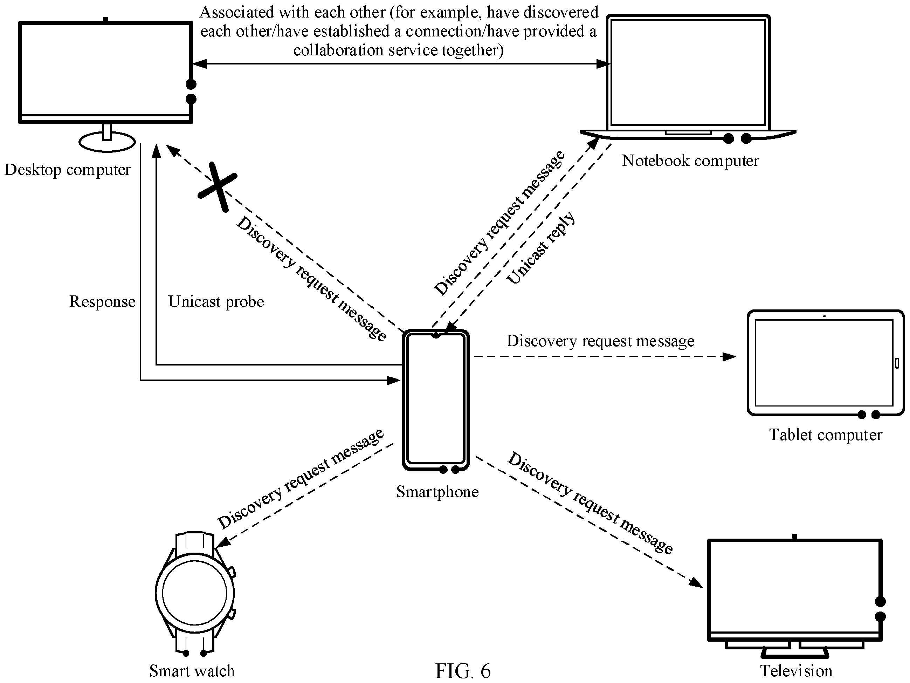

In an example, the device discovery method provided in embodiments of this application may be applied to a communication system shown in FIG. 6. As shown in FIG. 6, the communication system includes a smartphone, a television, a smart watch, a tablet computer, a desktop computer, and a notebook computer. The smartphone, the television, the smart watch, the tablet computer, the desktop computer, and the notebook computer are all connected to a same Wi-Fi network. The smartphone is the discovery device, that is, the first device.

When the smartphone (the smartphone is used as an example, and another device may alternatively be used as an example) shown in FIG. 6 performs device discovery, the smartphone (that is, the first device) first sends the discovery request message to the television, the smart watch, the tablet computer, the desktop computer, and the notebook computer, to discover a device that meets the specified condition. It is assumed that the notebook computer learns service information of the desktop computer (for example, the service information of the desktop computer is stored in the notebook computer), and it is determined, based on the service information of the desktop computer, that the desktop computer meets the specified condition. The notebook computer replies to the smartphone (that is, the first device) in a unicast manner, to notify the smartphone that the desktop computer meets the specified condition. The notebook computer is the second device, the desktop computer is the third device, and the notebook computer is associated with the desktop computer.

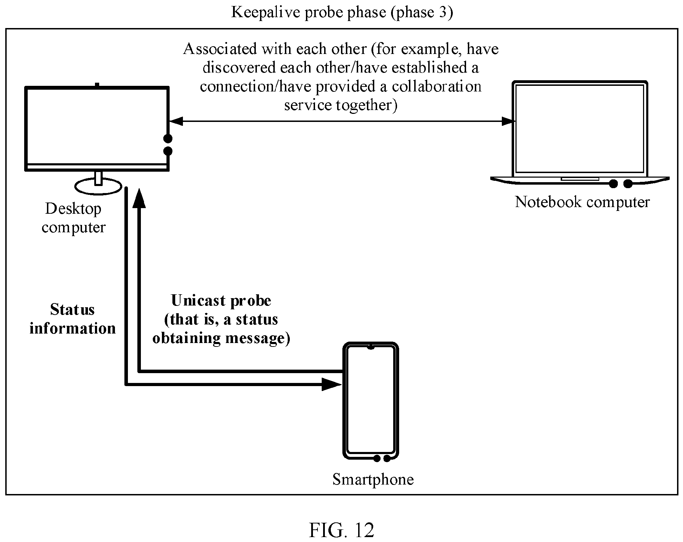

Further, after the smartphone receives the unicast reply from the notebook computer, to guarantee that a status of the television is normal, as shown in FIG. 12, the smartphone uses a unicast probe to determine whether the desktop computer is in a working state. It is assumed that the desktop computer is in the working state. The desktop computer sends, to the smartphone, information (for example, status information) indicating the state of the desktop computer, so that the smartphone discovers the desktop computer based on the message.

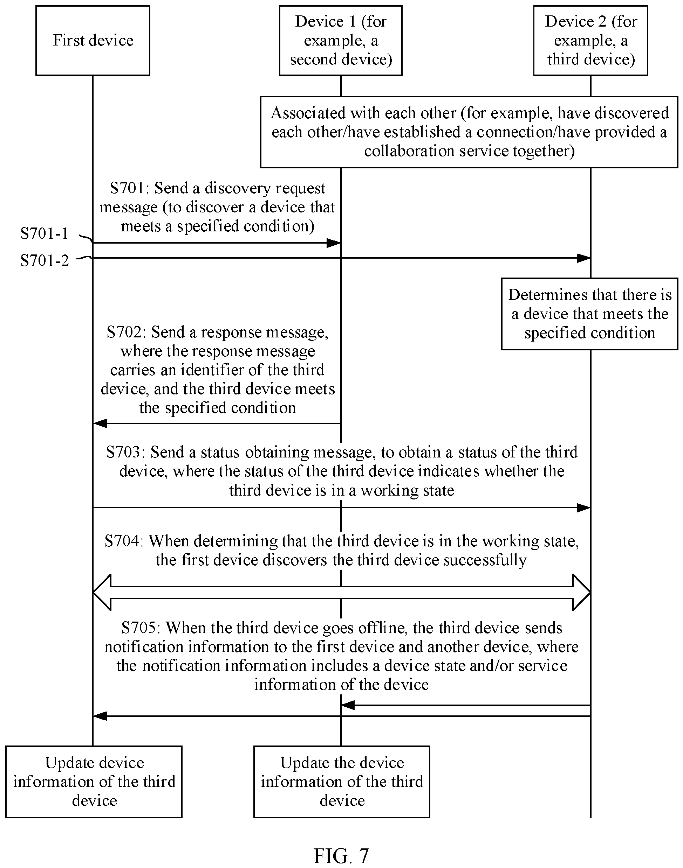

The following specifically describes a device discovery method according to an embodiment of this application with reference to the accompanying drawings. As shown in FIG. 7, the device discovery method provided in embodiments of this application may include S701 to S705. S701 is the foregoing phase 1, S702 is the foregoing phase 2, S703 is the foregoing phase 3, S704 is the foregoing phase 4, and S705 is the foregoing phase 5.

S701: A first device sends a discovery request message to a plurality of devices. The discovery request message is used to discover a device that meets a specified condition.

In some embodiments, the discovery request message includes a field or information indicating the specified condition.

For example, in this embodiment of this application, the specified condition may include but is not limited to one or more of the following: being in a specified wireless local area network, supporting a specified service type, meeting a specified service parameter, and supporting a specified function.

In this embodiment of this application, the service type may include but is not limited to projection (for example, video projection and image projection), audio projection, remote screen control, and file sharing. This is not limited in this application.

In a possible implementation, the first device may send the discovery request message to the plurality of devices by using a broadcast technology.

In another possible implementation, the first device may send the discovery request message to the plurality of devices by using a multicast (also referred to as "multicast") technology.

Multicast and broadcast are the same in terms of a one-to-many communication mode. Multicast and broadcast differ from each other in that multicast means sending a message to devices in a multicast domain, while broadcast means sending a message to devices in a broadcast domain. The multicast domain is a device set including all devices that receive multicast data packets over a same multicast address, and is also referred to as a multicast group. The broadcast domain represents all devices in a same wireless local area network, and is also referred to as a broadcast group. The multicast domain and the broadcast domain are also referred to as multicast domains. For specific descriptions of multicast and broadcast, refer to a conventional technology. Details are not described in this application.

It should be noted that FIG. 7 only shows an example in which the first device sends the discovery request message to a device 1 and a device 2. As shown in FIG. 7, S701 may include S701-1 and S701-2. However, a specific quantity of devices receiving the discovery request message from the first device is not limited in this embodiment of this application.

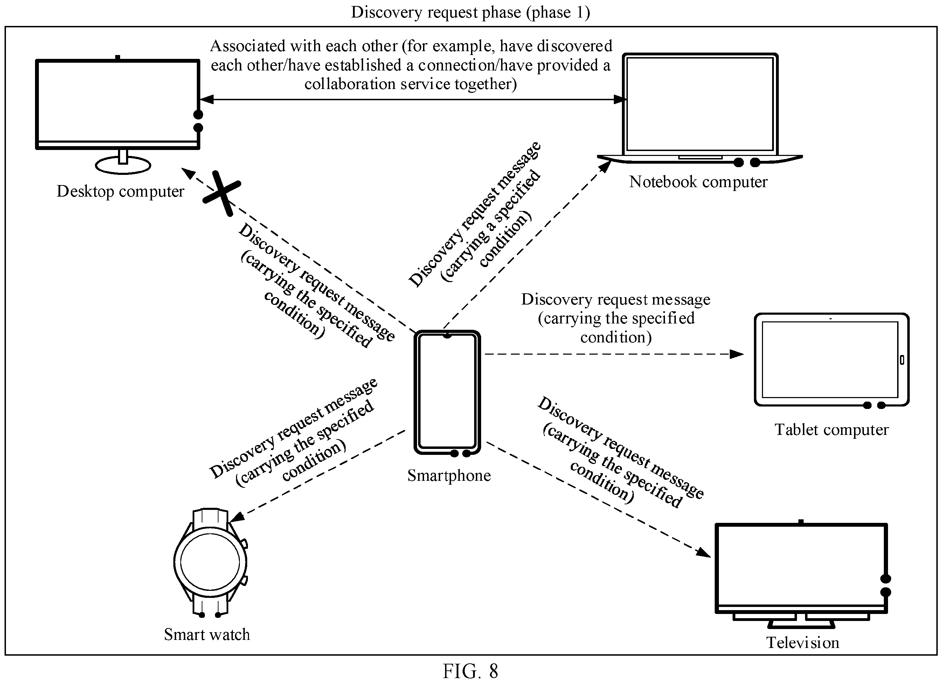

It is assumed that in a diagram of an example of interactions in a device discovery procedure shown in FIG. 6, the television, the smart watch, the tablet computer, the desktop computer, and the notebook computer form a multicast domain of the smartphone (that is, the first device). As shown in FIG. 8, when performing device discovery, the smartphone (that is, the first device) sends the discovery request message to the television, the smart watch, the tablet computer, the desktop computer, and the notebook computer by using a multicast technology, to discover a device that meets the specified condition. The discovery request message includes the field or the information indicating the specified condition. FIG. 8 shows an example in which the desktop computer fails to receive the discovery request message from the smartphone due to a cause such as poor network coverage or strong interference.

In an example, the first device may store service information of the one or more devices. The first device may determine the multicast domain based on the service information of the one or more devices and the specified condition. For example, the plurality of devices in the multicast domain are devices that meet the specified condition.

For example, the first device may passively receive the service information from the one or more devices (including the second device). For another example, the first device may actively obtain the service information from the one or more devices (including the second device). A specific manner of obtaining the service information of the device is not limited in this application.

In an example, in this embodiment of this application, the first device may perform device discovery according to any multicast discovery-based protocol, for example, a simple service discovery protocol (simple service discovery protocol, SSDP), include sending the discovery request message to the plurality of devices according to any protocol. This is not limited in this application. The discovery request message carries the field identifying the specified condition (for example, a specified service type).

The SSDP protocol is an application layer protocol. The SSDP protocol is commonly used to discover a universal plug and play (universal plug and play, UPnP) device. The SSDP protocol implements this through multicast discovery based on notification and discovery routing. In the Internet protocol version 4, (Internet protocol version 4, IPv4), a multicast address is a class D Internet protocol (Internet protocol, IP) address in a range from 224.0.0.0 to 239.255.255.255, such as 239.255.255.250. For another example, in the Internet protocol version 6 (Internet protocol version 6, IPv6), a multicast address may be FF0x::C (that is, FF0x:0000:0000:0000:0000:0000:0000:000C). In this embodiment of this application, the devices in the multicast domain monitor a multicast address (for example, 239.255.255.250) and a port (for example, a port 1900) to monitor the discovery request message.

For example, a method M-SEARCH is extended based on the SSDP by using the hypertext transfer protocol (hypertext transfer protocol, HTTP) protocol. A discovery request message may be as follows:
M-SEARCH * HTTP/1.1//, where it indicates that the packet is implemented through the method M-SEARCH extended by using the HTTP, 1.1 indicates an HTTP protocol version, and M-SEARCH indicates that the packet is used for search;
HOST: 239.255.255.250:1900//, where it indicates that a multicast address is 239.255.255.250 and a port is 1900 (IPv4);
MAN: ssdp:discover//, where it indicates that a protocol search type is ssdp:discover;
MX:seconds to delay response//, where it indicates maximum response wait time; and
ST: search target//, where it indicates a service search target.

The response is delayed a random duration between 0 and the value of the maximum response wait time (that is, MX) by the device, to balance network load for the device response.

As an example, the service search target (search target, ST) may include but is not limited to any one of the following: ssdp:all (searching all devices and services); upnp:rootdevice (searching only a root device in the network); uuid: device-UUID (querying a device identified by a universally unique identifier (universally unique identifier, UUID)); urn:schemas-upnp-org:device:device-Type:version (querying a device type specified by a device-Type field, where the device type and a version are defined by the UPNP organization); and urn:schemas-upnp-org:service:service-Type:version (querying a service type specified by a service-Type field, where the service type and a version are defined by the UPNP organization).

Further, if a device (for example, the second device) determines that there is another device that meets the specified condition, the device (that is, the second device) performs S702.

S702: The second device sends a response message to the first device, where the response message carries an identifier of a third device, and the third device meets the specified condition.

For example, the second device sends the response message to the first device in a unicast reply manner.

For example, the identifier of the third device may be a media access control (media access control, MAC) address, an identity (identity, ID), or an international mobile equipment identity (international mobile equipment identity, IMEI) of the third device. This is not limited in this embodiment of this application.

The second device is a device that is in the plurality of collaborated devices and that receives the discovery request message from the first device. As shown in FIG. 7, the second device is associated with a third device. For example, the second device has been discovered by the third device, the second device has discovered the third device, the second device has established a connection to the third device, or the second device and the third device have provided a collaboration service together.

The second device stores service information of the one or more devices, including service information of the third device.

A specific manner of obtaining the service information of the device is not limited in this application. In an example, the second device may passively receive the service information from the one or more devices (including the third device). For example, the one or more devices and the second device are in a same multicast or broadcast domain, or a local area network.

For example, when a device (for example, the third device) accesses a local area network, the device may broadcast, to devices (for example, including the second device) in the same local area network, based on the SSDP, a service type that can be provided by the device. For example, the device (for example, the third device) may advertise the service information by multicasting the discovery request message to a standard address and a port. Devices (for example, including the second device) in the same local area network listens to the port to detect whether a new service is added to a system. For example, a format of a packet for obtaining the service information is as follows:
NOTIFY * HTTP/1.1//, where it indicates that the packet is implemented through a method NOTIFY extended by using the HTTP, 1.1 indicates the HTTP version, and NOTIFY indicates that the packet is used to perform notification (for example, notifying service information (for example, the service type));
HOST: 239.255.255.250:1900//, where it indicates that a multicast address is 239.255.255.250 and a port is 1900 (IPv4);
CACHE-CONTROL: max-age = seconds until advertisement expires//, where max-age specifies time a notification message is valid. After this time interval, the control point may assume the device does not exist;
LOCATION: URL for UPnP description for root device/, where it indicates a URL to the description of the root device;
NT: search target//, where it indicates a service search target;
NTS: ssdp:alive//, where it indicates that a subtype of the notification message is ssdp:alive; and
USN: advertisement UUID//, where it indicates a unique service name of different services, and provides a capability of identifying a same service type.

In another example, the second device may actively obtain the service information from the one or more devices (including the third device). For example, a format of a packet for obtaining the service information is as follows:
C-SERVICES * HTTP/1.1//, where it indicates that the packet is implemented through a method C-SERVICES extended by using the HTTP, 1.1 indicates the HTTP version, and C-SERVICES indicates that the packet is used to obtain the service information (for example, the service type) of the device; and
MX:seconds to delay response//, where it indicates maximum response wait time.

Further, for example, the one or more devices such as the third device reply to the second device with service information of the one or more devices. For example, a format of a reply packet is as follows:
HTTP/1.1 200 OK//, where it indicates HTTP response information, 1.1 indicates the HTTP version, 200 is status code, and 200 OK indicates a successful connection;
SERVICES: a provided service type//, where the service type may be 16-bit (bit), and each bit identifies a different service, for example, 1 indicates that a service is supported, and 0 indicates that a service is not supported;
LOCATION: networking information//, for example, the networking information may mainly include an IP address and a port number; and
SERVICE-DESCRIPTION: a necessary description required by the service//, where the description varies based on services, for example, device resolution is required for projection, and a playback type supported by a playback device is required for audio projection.

It may be understood that because the second device is associated with the third device, the second device knows the service information of the third device. The service information of the third device may at least indicate one or more of the following: a service type supported by the third device, a service parameter that can be met by the third device, and a function supported by the third device.

For example, the second device learns one or more of the service type supported by the third device, the service parameter that can be met by the third device, or the function supported by the third device. In view of this, if the third device meets the specified condition, the first device may indirectly learn the service information from the second device.

In an example, in this embodiment of this application, the second device may store service information of the one or more devices. When the second device receives, from the first device, the discovery request message carrying a specified service type, the second device queries the locally stored service information of the one or more devices, to determine a device that supports the specified service type, and sends, to the first device, a response message that carries an identifier of the device supporting the specified service type.

For example, the second device stores and maintains a service information list. The service information list indicates one or more of the following: one or more devices supporting projection, one or more devices supporting distributed screen control, one or more devices supporting audio projection, one or more devices supporting file sharing devices, or the like. For example, the service information list may include an identifier of a device supporting projection, an identifier of a device supporting distributed screen control, an identifier of a device supporting audio projection, and an identifier of a device supporting file sharing.

In Table 1, an example in which service information indicates supported service types is used, to show a form of service information, stores in the second device, of one or more devices.

**Table 1**

| Supported service types | Projection Distributed | Screen control | Audio projection | File sharing |
|---|---|---|---|---|
| Device identifiers | Identifier of a device 1, identifier of a device 2, and identifier of a device 3 | Identifier of the device 1 and identifier of the device 2, | Identifier of the device 1, identifier of the device 2, identifier of the device 3, and identifier of a device 4 | Identifier of the device 1, identifier of the device 2, identifier of the device 3, and identifier of the device 4 |

It should be noted that Table 1 is merely used as an example. A specific form of service information, stores in the second device, of one or more devices is not limited in this embodiment of this application.

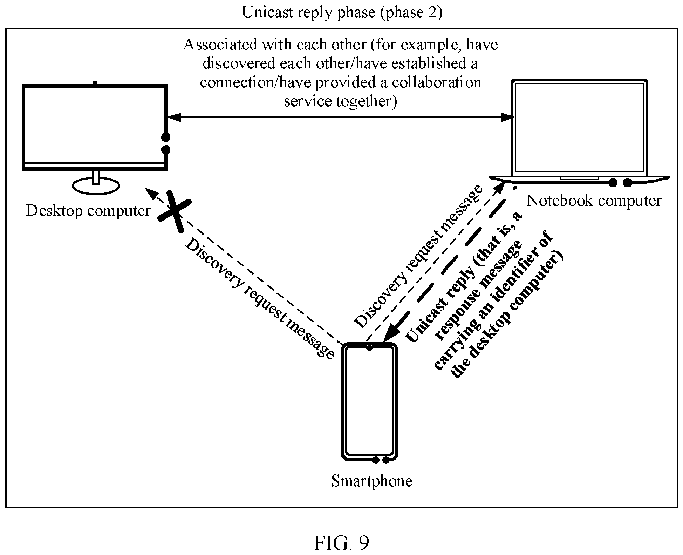

As shown in FIG. 9, it is assumed that the notebook computer determines that the desktop computer meets the condition specified by the smartphone (that is, the first device), the notebook computer replies to (that is, sends a response message to) the smartphone in a unicast manner, to notify the smartphone that the desktop computer meets the specified condition. The response message carries an identifier of the desktop computer. The notebook computer is the second device, and the desktop computer is the third device.

For example, the response message according to the SSDP protocol may be as follows:
CACHE-CONTROL: max-age = seconds until advertisement expires//, where max-age specifies a lifetime of a notification message, and if the notification message expires this interval, a control point considers that the device does not exist;
DATE: when response was generated//, where it indicates response generation time;
EXT://, where it confirms that the device understands a MAN header field;
LOCATION: URL for UPnP description for root device//, where it indicates a uniform resource locator (URL) to the description of the root device;
SERVER: OS/Version UPNP/1.0 product/version//, where it indicates the name of an operating system/a version/a product name/product version information;
ST: search target//, where it indicates a service search target;
USN: advertisement UUID//, where it indicates a unique service name of different services, and provides a capability of identifying a same service type; and
COLLABORATIVE-DISCOVERY: ip:porth, where when this is not empty, it indicates that the response message from the second device carries the identifier of the third device that meets the preset condition.

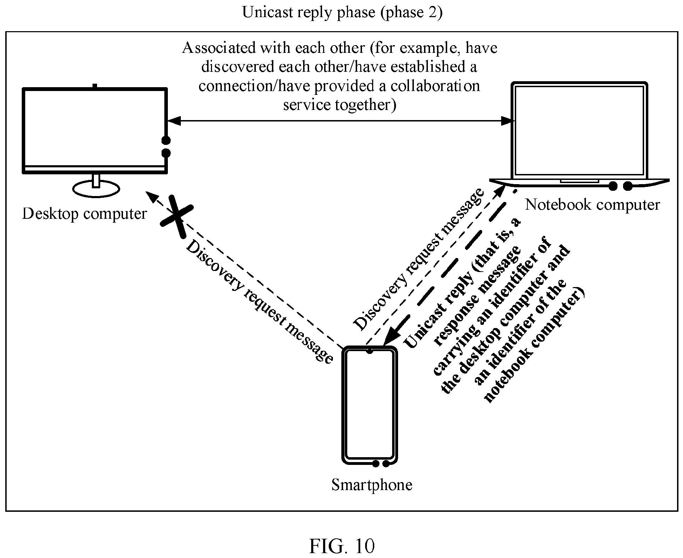

In a possible implementation, if the second device meets the specified condition, the response message further carries information indicating that the second device meets the specified condition, to notify the first device that the second device meets the specified condition. As shown in FIG. 10, it is assumed that the notebook computer meets the specified condition, the response message shown in FIG. 10 further carries an identifier of the notebook computer. The notebook computer is the second device.

It should be noted that a specific manner in which the second device sends, to the first device, the identifiers of the second and third devices that meet the specified condition is not limited in this application. For example, the second device may separately send, to the first device, the identifiers of the third and second devices.

It should be noted that FIG. 6 only shows an example in which the notebook computer (that is, the second device) replies to (that is, sends the response message to) the smartphone (that is, the first device) in the unicast manner. In some embodiments, if the notebook computer, the tablet computer, the smart watch, or the television shown in FIG. 6 meets the specified condition, a response message (that is, a unicast reply) may be returned to the smartphone, to notify the smartphone that the foregoing device meets the specified condition.

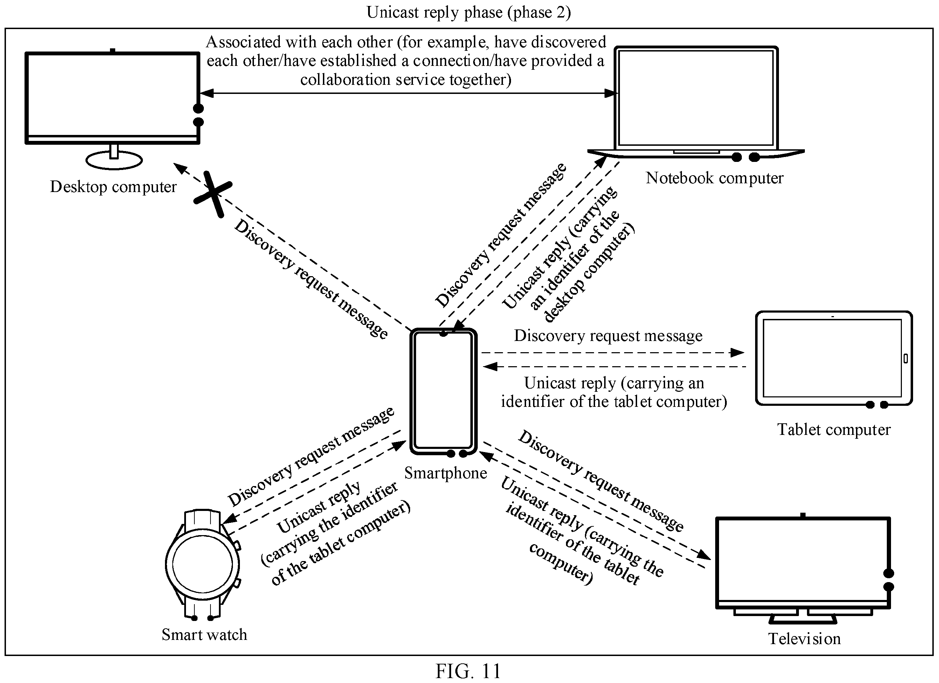

As shown in FIG. 11, it is assumed that the notebook computer, the tablet computer, the smart watch, and the television meet the specified condition, the notebook computer, the tablet computer, the smart watch, and the television separately send unicast replies to the smartphone. The unicast replies carry respective identifiers of the foregoing devices, to notify the smartphone that the foregoing devices meet the specified condition.

In addition, FIG. 6 only shows an example in which the notebook computer (that is, the second device) replies to the smartphone in the unicast manner, to notify the smartphone that the desktop computer meets the specified condition. In some embodiments, if the tablet computer, the smart watch, or the television shown in FIG. 6 determines that another device also meets the specified condition. In this case, the response message may also carry an identifier of the device (not shown in FIG. 6). For example, it is assumed that the television shown in FIG. 6 determines that the tablet computer meets the specified condition, the television may also send a response message (that is, a unicast reply) to the smartphone. The response message carries an identifier of the tablet computer. The television is the second device, and the tablet computer is the third device.

In addition, FIG. 6 shows an example in which the desktop computer fails to receive the discovery request message from the smartphone due to a reason poor network coverage or strong interference, and consequently does not reply to the smartphone in the unicast manner. In a possible case, the desktop computer shown in FIG. 6 may alternatively receive the discovery request message from the smartphone successfully, but fails to reply to the smartphone in the unicast manner. In another possible case, the desktop computer shown in FIG. 6 may not belong to the multicast domain of the smartphone. Therefore, the smartphone does not send the discovery request message to the desktop computer. A specific reason why the smartphone fails to receive the unicast reply from the desktop computer is not limited in this application.

It should be noted that FIG. 7 only shows an example in which the second device determines that the third device meets the specified condition. A quantity of devices that are determined by the second device and that meet the specified condition is not limited in this embodiment of this application. For example, the response message sent to the first device by the second device may alternatively include an identifier of a fourth device. The fourth device meets the specified condition, and the fourth device is associated with the second device. Further, the first device may send a status obtaining message to the fourth device, to obtain a status of the fourth device, to indicate whether the fourth device is in a working state. Further, the first device may discover the fourth device when the working state of the fourth device is obtained.

In this embodiment of this application, the fourth device may or may not be in the multicast domain in which the first device sends the discovery request message. This is not limited in this application.

S703: The first device sends a status obtaining message to the third device, to obtain a status of the third device, where the status of the third device indicates whether the third device is in a working state.

Whether the third device is in a working state includes at least one of the following: whether the third device is powered on, whether the third device is online, and the like.

For example, that the first device sends a status obtaining message to the third device includes: The first device sends a unicast probe message to the third device. For example, the status obtaining message may include a probe packet.

For example, a method P_ALIVE is extended according to the SSDP by using the HTTP. The status obtaining message may be as follows:
P_ALIVE * HTTP/1.1//, where it indicates that the packet is implemented through the method P_ALIVE extended by using the HTTP, 1.1 indicates the HTTP version, and P_ALIVE indicates that the packet is used for a keepalive probe;
MAN: ssdp:probes-live//, where it identifies that this message is used for the keepalive probe; and
MX: seconds to delay response//, where it indicates maximum response wait time of a device.

It may be understood that, because the first device indirectly learns, from the second device, that the third device meets the specified condition, whether the third device is specifically in the working state is unknown to the first device. Alternatively, even if the second device notifies the first device that the third device is in the working state. However, there may be a bias in this information. For example, the third device is offline but the second device does not know it. Therefore, the first device sends the status obtaining message to the third device, to obtain a status of the third device, to determine that the third device is in the working state. This avoids false discovery.

Further, if the third device is in the working state, the third device replies to the first device with a status response message.

For example, the status response message may be replied in the unicast manner.

It may be understood that if the third device sends the status response message to the first device, this indicates that the third device is in the working state, for example, the third device is powered on and online. For example, the status response message may carry status information of the third device. For another example, the status response message may carry information (for example, Alive) that may indicate that the third device keeps alive. A specific form of the status response message and specific content of the status response message are not limited in this application.

For example, the status response message according to the SSDP may be as follows:
HTTP/1.1 200 OK//, where it indicates HTTP response information, 1.1 indicates the HTTP version, 200 is status code, and 200 OK indicates a successful connection;
LOCATION: URL for UPnP description for root device///, where it indicates a URL to the description of the root device;
NTS: ssdp:alive//, where it identifies that the message is used to notify that a device may be in a working state (that is, keep alive); and
USN: advertisement UUID////, where it indicates a unique service name of different services, and provides a capability of identifying a same service type.

Further, in some embodiments, if the third device determines that another device (for example, a fifth device) associated with the third device meets the specified condition, the status response message sent to the first device by the third device may further include an identifier of the fifth device. Further, the first device may send a status obtaining message to the fifth device, to obtain a status of the fifth device, to indicate whether the fifth device is in a working state. Further, the first device may discover the fifth device when the working state of the fifth device is obtained.

In this embodiment of this application, the fifth device may or may not be in the multicast domain in which the first device sends the discovery request message. This is not limited in this application.

S704: When determining that the third device is in the working state, the first device discovers the third device.

In some embodiments, if the first device receives the status response message from the third device, this indicates that the third device is in the working state. In this case, the first device discovers the third device.

On the contrary, if the first device fails to receive the status response message from the third device, this indicates that the third device cannot be in the working state. In this case, the first device fails to discover the third device.

Further, after the first device discovers the third device, the first device stores information about the third device.

In an example, the information about the third device may include but is not limited to a device name of the third device, a device type of the third device, a device serial number of the third device, a device identifier of the third device, a function or a parameter supported by the third device, or the like. This is not limited in this application.

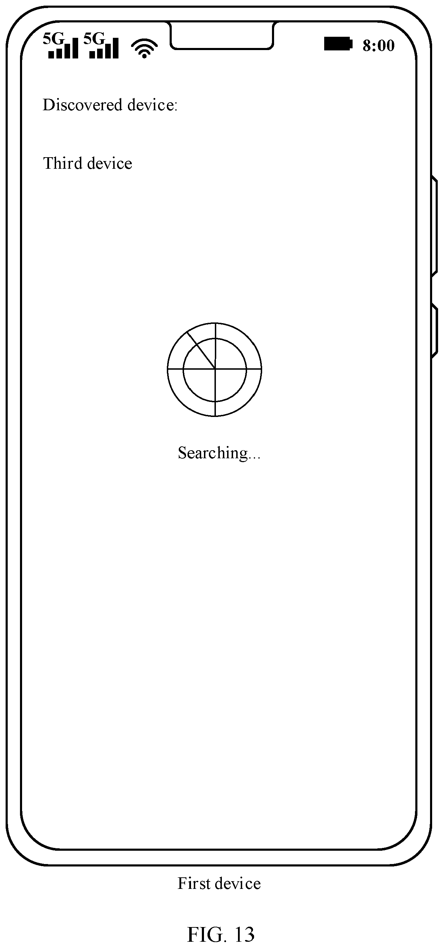

In some embodiments, in a procedure in which the first device performs device discovery, if the first device discovers the third device, a discovered device interface of the first device may include the discovered third device, as shown in FIG. 13.

S705: When the third device goes offline, the third device sends notification information to the first device and another device.

In this embodiment of this application, that the third device goes offline means that a communication connection between the third device and the first device for multi-device collaboration is disconnected after multi-device collaboration finishes.

For example, in this embodiment of this application, when the third device goes offline, the third device may send the notification information to the first device and another device in a broadcast/multicast manner.

For example, the method NOTIFY extended by using the HTTP protocol is used for an SSDP-based implementation. A response message may be as follows:
NOTIFY * HTTP/1.1//, where it indicates that the packet is implemented through the method NOTIFY extended by using the HTTP;
HOST: 239.255.255.250:1900 //, where it indicates that a multicast address is 239.255.255.250 and a port is 1900 (IPv4);
NT: search target//, where it indicates a service search target; and
NTS: ssdp:byebye//, where it indicates that a subtype of the notification message is ssdp:byebye.

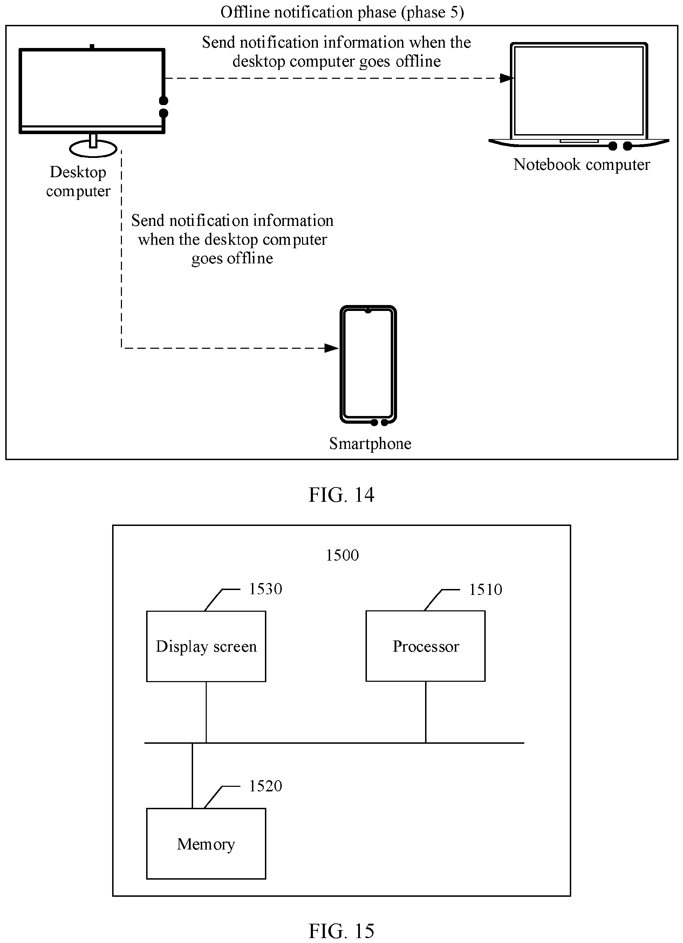

In some embodiments, as shown in FIG. 14, when the desktop computer goes offline, the desktop computer sends notification information to the smartphone and the notebook computer. The notification information includes service information of the desktop computer.

It may be understood that the service information of the device may change. For example, it is assumed that the third device supports a service type 1, a service type 2, and a service type 3. However, the service information that is of the third device and that is stored in the second device indicates that the third device supports only the service type 1 and the service type 2. In view of this, in this embodiment of this application, when the third device goes offline, the third device sends notification information including the service information of the device to the first device and the plurality of collaborated devices, so that the first device and the other devices update the service information of the third device in real time. In view of this, more convenient, faster, and more accurate device discovery is provided during subsequent device discovery. For example, when performing device discovery next time, the first device may send a device discovery request to a corresponding device based on stored service information of the one or more devices.

In the device discovery method provided in embodiments of this application, when receiving a multicast/broadcast discovery request message from a discovery device (for example, the first device), a device (for example, the second device) may search for service information that is of one or more devices and that is stored in the device, to determine a device (for example, the third device) that meets a condition specified by the discovery device (that is, the first device), and notify the discovery device (that is, the first device). In this way, the discovery device (that is, the first device) discovers the device (that is, the third device) when determining, by using a keepalive probe, that the device (that is, the third device) that meets the specified condition is in a working state. In the method, breakthroughs are made in a conventional direct discovery technology, and device discovery is performed by indirectly obtaining information. This can improve a success rate of device discovery, optimize a discovery procedure, guarantee reliability of device discovery, reduce network overheads, and reduce network load.

Further, the device discovery method provided in embodiments of this application can improve device awareness in a device discovery procedure and a device connection procedure. For example, in the device discovery procedure, this helps fault data retaining and recovery from an anomaly when a device is faulty. For example, when the third device meets the preset condition, but the first device fails to receive a response of the third device to the discovery request message of the first device, it is inferred that the third device is faulty or a communication link between the first device and the third device is faulty.

It should be noted that all or a part of embodiments of this application may be randomly and freely combined. A combined technical solution also falls within the scope of this application.

The device discovery method according to this embodiment of this application is applicable to the following electronic device.

FIG. 15 shows an electronic device 1500 according to this application. For example, the electronic device 1500 includes at least one processor 1510, a memory 1520, and a display screen 1530. The processor 1510 is coupled to the memory 1520 and the display screen 1530. Coupling in this embodiment of this application may be a communication connection, an electrical connection, or another form of connection. Specifically, the memory 1520 is configured to store program instructions. The display screen 1530 is configured to display a user interface. The processor 1510 is configured to invoke the program instructions stored in the memory 1520, to enable the electronic device 1500 to perform the steps performed by an electronic device in the device discovery method provided in embodiments of this application. It should be understood that, the electronic device 1500 may be configured to implement the device discovery method provided in embodiments of this application. For related features, refer to the foregoing descriptions. Details are not described herein again.

In some embodiments, when the display screen has a touch function, the display screen is also referred to as a touchscreen. An operation on the touchscreen may be implemented by using a virtual key. When the display screen does not have a touch function, the display screen is also referred to as a non-touchscreen. An operation on the non-touchscreen may be implemented by using a physical button.

This application provides a computer program product including instructions. When the computer program product is run on an electronic device, the electronic device is enabled to perform the steps performed by an electronic device in the device discovery method provided in embodiments of this application.

For example, the electronic device includes a mobile device and the like.

A person skilled in the art may clearly understand that this embodiment of this application may be implemented by using hardware, or implemented by using hardware and software. When hardware and software are used for implementation, the foregoing function may be stored in a computer-readable medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk drive, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A device discovery method, applied to a first device, wherein the method comprises:
sending a discovery request message to N devices comprising a second device, wherein the discovery request message is used to discover a device that meets a specified condition, the discovery request message comprises information indicating the specified condition, and N is a positive integer greater than or equal to 1;
receiving a first response message from the second device, wherein the first response message comprises an identifier of a third device that meets the specified condition;
sending a first status obtaining message to the third device, to obtain a status of the third device, wherein the status of the third device indicates whether the third device is in a working state; and
discovering the third device when the working state of the third device is obtained.

2. The method according to claim 1, wherein the first response message further comprises an identifier of a fourth device that meets the specified condition; and
the method further comprises:
sending a second status obtaining message to the fourth device, to obtain a status of the fourth device, wherein the status of the fourth device indicates whether the fourth device is in a working state; and
discovering the fourth device when the working state of the fourth device is obtained.

3. The method according to claim 1 or 2, wherein the method further comprises:
receiving a second response message from the third device, wherein the second response message comprises an identifier of a fifth device that meets the specified condition;
sending a third status obtaining message to the fifth device, to obtain a status of the fifth device, wherein the status of the fifth device indicates whether the fifth device is in a working state; and
discovering the fifth device when the working state of the fifth device is obtained.

4. The method according to any one of claims 1 to 3, wherein
the sending a discovery request message to N devices comprising a second device comprises:
sending, in a multicast or broadcast manner, the discovery request message to the N devices comprising the second device;
the receiving a first response message from the second device comprises: receiving the first response message sent in a unicast manner by the second device; and
the sending a first status obtaining message to the third device comprises: sending the first status obtaining message to the third device in the unicast manner.

5. The method according to any one of claims 2 to 4, wherein
the sending a second status obtaining message to the fourth device comprises: sending the second status obtaining message to the fourth device in the unicast manner.

6. The method according to claim 3 or 4, wherein
the receiving a second response message from the third device comprises: receiving, in the unicast manner, the second response message sent in the unicast manner by the third device; and
the sending a third status obtaining message to the fifth device comprises: sending the third status obtaining message to the fifth device in the unicast manner.

7. The method according to any one of claims 1 to 6, wherein the first device prestores service information of M devices, and before the sending a discovery request message to N devices comprising a second device, the method further comprises:
determining, based on the service information of the M devices, the N devices that meet the specified condition, wherein M is a positive integer greater than or equal to N.

8. The method according to any one of claims 1 to 7, wherein the first response message further comprises information indicating that the second device meets the specified condition, and the method further comprises:
discovering the second device in response to the first response message.

9. The method according to any one of claims 1 to 8, wherein the specified condition comprises at least one of the following: being in a specified wireless local area network, supporting a specified service type, meeting a specified service parameter, and supporting a specified function.

10. The method according to any one of claims 1 to 9, wherein the N devices comprise the third device.

11. A device discovery method, applied to a second device, wherein the second device is associated with a third device, and the method comprises:
receiving a discovery request message from a first device, wherein the discovery request message is used to discover a device that meets a specified condition, and the discovery request message comprises information indicating the specified condition; and
sending a first response message to the first device, wherein the first response message comprises an identifier of the third device that meets the specified condition, and the first response message indicates that the third device meets the specified condition.

12. The method according to 11, wherein the second device is associated with a fourth device, and the first response message further comprises an identifier of the fourth device that meets the specified condition.

13. The method according to claim 11 or 12, wherein
the sending a first response message to the first device comprises: sending the first response message to the first device in a unicast manner.

14. The method according to any one of claims 11 to 13, wherein
that the second device is associated with a third device comprises at least one of the following: the second device has been discovered by the third device, the second device has discovered the third device, the second device has established a connection to the third device, and the second device and the third device have provided a collaboration service together.

15. A device discovery method, applied to a communication system, wherein the communication system comprises a first device and N devices, the N devices comprise a second device, and the second device is associated with a third device; and the method comprises:
sending, by the first device, a discovery request message to the N devices comprising the second device, wherein the discovery request message is used to discover a device that meets a specified condition, the discovery request message comprises information indicating the specified condition, and N is a positive integer greater than or equal to 1;
receiving, by the second device, the discovery request message from the first device;
sending, by the second device, a first response message to the first device, wherein the first response message comprises an identifier of the third device that meets the specified condition;
receiving, by the first device, the first response message from the second device;
sending, by the first device, a first status obtaining message to the third device, to obtain a status of the third device, wherein the status of the third device indicates whether the third device is in a working state; and
discovering, by the first device, the third device when the working state of the third device is obtained.

16. The method according to 15, wherein the first response message further comprises an identifier of a fourth device that meets the specified condition, and the second device is associated with the fourth device; and the method further comprises:
sending, by the first device, a second status obtaining message to the fourth device, to obtain a status of the fourth device, wherein the status of the fourth device indicates whether the fourth device is in a working state; and
discovering, by the first device, the fourth device when the working state of the fourth device is obtained.

17. The method according to claim 15 or 16, wherein
the sending, by the first device, a discovery request message to the N devices comprising the second device comprises: sending, by the first device in a multicast or broadcast manner, the discovery request message to the N devices comprising the second device;
the sending, by the second device, a first response message to the first device comprises: sending, by the second device, the first response message to the first device in a unicast manner; and
the sending, by the first device, a first status obtaining message to the third device comprises: sending, by the first device, the first status obtaining message to the third device in the unicast manner.

18. The method according to any one of claims 15 to 17, wherein
that the second device is associated with a third device comprises at least one of the following: the second device has been discovered by the third device, the second device has discovered the third device, the second device has established a connection to the third device, and the second device and the third device have provided a collaboration service together.

19. The method according to claim 18, wherein the second device stores service information of the third device.

20. A communication system, wherein the communication system comprises a first device and N devices, the N devices comprise a second device, and the second device is associated with a third device;
the first device is configured to:
send a discovery request message to the N devices comprising the second device, wherein the discovery request message is used to discover a device that meets a specified condition, the discovery request message comprises information indicating the specified condition, and N is a positive integer greater than or equal to 1; and receive a first response message from the second device, wherein the first response message comprises an identifier of the third device that meets the specified condition;
send a first status obtaining message to the third device, to obtain a status of the third device, wherein the status of the third device indicates whether the third device is in a working state; and
discover the third device when the working state of the third device is obtained; and
the second device is configured to:
receive the discovery request message from the first device; and
send a first response message to the first device, wherein the first response message indicates that the third device meets the specified condition.

21. The system according to claim 20, wherein
the first response message further comprises an identifier of a fourth device that meets the specified condition; and
the first device is further configured to:
send a second status obtaining message to the fourth device, to obtain a status of the fourth device, wherein the status of the fourth device indicates whether the fourth device is in a working state; and discover the fourth device when the working state of the fourth device is obtained.

22. The system according to claim 20 or 21, wherein
that the first device sends a discovery request message to the N devices comprising the second device comprises: sending, by the first device in a multicast or broadcast manner, the discovery request message to the N devices comprising the second device;
that the second device sends a first response message to the first device comprises: sending, by the second device, the first response message to the first device in a unicast manner; and
that the first device sends a first status obtaining message to the third device comprises: sending, by the first device, the first status obtaining message to the third device in the unicast manner.

23. A first device, wherein the first device comprises:
a memory, configured to store a computer program;
a transceiver, configured to receive and send a radio signal; and
a processor, configured to execute the computer program, to enable the first device to perform the method according to any one of claims 1 to 10.

24. A second device, wherein the second device comprises:
a memory, configured to store a computer program;
a transceiver, configured to receive and send a radio signal; and
a processor, configured to execute the computer program, to enable the second device to perform the method according to any one of claims 11 to 14.

25. A computer-readable storage medium, wherein the computer-readable storage medium comprises a computer program, and when the computer program is run on a first device, the first device is enabled to perform the method according to any one of claims 1 to 12.

26. A computer program product, wherein when the computer program product is run on a first device, the first device is enabled to perform the method according to any one of claims 1 to 12.
